# EUROPÄISCHE PATENTSCHRIFT

(11) **EP 4 324 889 B1**
(45) Veröffentlichungstag und Bekanntmachung des Hinweises auf die Patenterteilung: **10.06.2026**
(21) Anmeldenummer: 23219822.6
(22) Anmeldetag: 29.04.2020
(51) Int. Cl.: G05B 23/02, B05B 12/00, G05B 19/418, B05D 7/14, C25D 11/00, C09D 5/44, B05B 12/08

(54) **VERFAHREN ZUR ANALYSE VON QUALITÄTSMÄNGELN**
METHOD FOR ANALYSING QUALITY DEFECTS
PROCÉDÉ POUR L'ANALYSE DE DÉFAUTS DE QUALITÉ

(30) Priorität: 09.05.2019 DE 102019112099; 10.05.2019 DE 102019206833
(43) Veröffentlichungstag der Anmeldung: 21.02.2024
(62) Teilanmeldung aus: 20726291.6
(73) Patentinhaber: Dürr Systems AG, 74321 Bietigheim-Bissingen (DE)
(72) Erfinder: Alt, Simon, 70197 Stuttgart (DE); Schuh, Jan-Philipp, 74348 Lauffen am Neckar (DE); Schurer, Ralf, 71672 Marbach am Neckar (DE); Hummel, Markus, 73660 Urbach (DE); Berner, Jens, 71696 Möglingen (DE); Häcker, Jens, 71706 Markgröningen (DE); Hezel, Thomas, 71679 Asperg (DE); Herre, Frank, 71739 Oberriexingen (DE); Zabel, Michael, 71364 Winnenden (DE); Wieland, Dietmar, 71336 Waiblingen (DE); Oetinger, Philipp, 74343 Sachsenheim (DE); Heim, Robin, 74363 Güglingen (DE)
(74) Vertreter: DTS Patent- und Rechtsanwälte PartmbB

(56) Entgegenhaltungen:
- WO-A1-2004/079057
- US-A1- 2010 161 141
- US-A1- 2018 326 591

## Beschreibung

Die vorliegende Erfindung betrifft ein Verfahren zur Analyse von Qualitätsmängeln von Werkstücken, vorzugsweise von Fahrzeugkarosserien und/oder von Fahrzeuganbauteilen, insbesondere nach und/oder bei dem Durchlaufen eines Produktionsprozesses in verfahrenstechnischen Anlagen, vorzugsweise nach und/oder bei dem Durchlaufen eines Lackierprozesses in Lackieranlagen.

Beim Kauf von Kraftfahrzeugen erwarten Käufer, die ein solches Kraftfahrzeug erwerben, bezüglich der Lackierung des Kraftfahrzeugs eine hohe Qualität. Die jeweiligen Käufer erwarten dabei beispielsweise, dass die Fahrzeugkarosserie und/oder die Fahrzeuganbauteile keine Lackierfehler, d.h. beispielsweise keine Schmutzeinschlüsse, Krater, Läufer, Kratzer und/oder Lufteinschlüsse (Kocher) umfassen. Die Käufer erwarten ferner einen über die Fahrzeugkarosserie gleichbleibenden Farbverlauf, Farbton, Glanzgrad und/oder eine gleichbleibende Brillanz. Auch ein zumindest näherungsweise gleichmäßiger Aufbau der verschiedenen Beschichtungen und/oder Lackschichten und/oder eine zumindest näherungsweise gleichmäßige Schichtdicke der Beschichtungen und/oder Lackschichten ist erwünscht. Zudem soll die Lackierung einer Fahrzeugkarossiere und/oder von Fahrzeuganbauteilen auch beständig gegen äußere Einflüsse sein, beispielsweise gegen UV-Strahlung, Hitze, Kälte, Regen, Streusalz, Steinschläge, Vogelkot, Staub und/oder gegen Kratzer durch Waschanlagen.

Um diese hohen Erwartungen erfüllen zu können, werden an den Fahrzeugkarosserien aufwändige Qualitätskontrollen durchgeführt und bei der Feststellung von Mängeln werden gegebenenfalls Nacharbeiten durchgeführt. Dabei wird in einem Lackierprozess in jedem Prozessschritt eine neue Beschichtung und/oder Lackschicht aufgetragen, so dass Qualitätsmängel in unteren Schichten im Rahmen der Qualitätskontrolle nicht oder nur schwer identifizierbar sind. Um eine möglichst hohe Qualität der Lackierung gewährleisten zu können, wäre daher nach dem Aufbringen jeder einzelnen Beschichtung und/oder Lackschicht eine Qualitätskontrolle erforderlich. Dies ist jedoch aufgrund des sehr schnellen Produktionstaktes in einer Lackieranlage nicht möglich.

Aus der US 2018/326591 A1 ist bereits ein Verfahren zur automatischen Erkennung von Fehlern in der Oberfläche eines Werkstücks und Erzeugung eines Roboterprogramms für die Bearbeitung des Werkstücks bekannt.

Aus der US 2010/161141 A1 ist ferner ein Fehlerprotokollierungsverfahren für eine Beschichtungsanlage bekannt, welches das Erfassen eines Fehlers während des Ablaufs von Prozessdatensätzen für die Beschichtungsanlage umfasst, wobei die einzelnen Prozessdatensätze entsprechend der gegebenen Betriebszeit der Beschichtungsanlage geordnet sind und jeweils verschiedene Prozessdaten der Beschichtungsanlage enthalten.

Der vorliegenden Erfindung liegt die Aufgabe zugrunde, ein Verfahren zur Analyse von Qualitätsmängeln von Werkstücken, vorzugsweise von Fahrzeugkarosserien und/oder von Fahrzeuganbauteilen, insbesondere nach und/oder bei dem Durchlaufen eines Produktionsprozesses in verfahrenstechnischen Anlagen, vorzugsweise nach und/oder bei dem Durchlaufen eines Lackierprozesses in Lackieranlagen, bereitzustellen, mittels welchem Qualitätsmängel vermieden werden können und/oder mittels welchem Qualitätsmängelursachen im Produktionsprozess ermittelt, vermieden und/oder behoben werden können.

Diese Aufgabe wird erfindungsgemäß durch ein Verfahren zur Analyse von Qualitätsmängeln von Werkstücken, welche Fahrzeugkarosserien und/oder von Fahrzeuganbauteile sind, insbesondere nach und/oder bei dem Durchlaufen eines Produktionsprozesses in verfahrenstechnischen Anlagen, vorzugsweise nach und/oder bei dem Durchlaufen eines Lackierprozesses in Lackieranlagen, mit den Merkmalen des Anspruchs 1 gelöst.

Das Verfahren umfasst Folgendes:
- Erstellen eines einer Fahrzeugkarossiere und/oder einem Fahrzeuganbauteil eindeutig zugeordneten werkstückspezifischen Datensatzes zu Beginn eines Produktionsprozesses, insbesondere zu Beginn eines Lackierprozesses und/oder Erstellen eines einem Werkstückträger eindeutig zugeordneten werkstückträgerspezifischen Datensatzes zu Beginn eines Produktionsprozesses, insbesondere zu Beginn eines Lackierprozesses;
- Ergänzen des werkstückspezifischen Datensatzes während eine Fahrzeugkarossiere und/oder ein Fahrzeuganbauteil den Produktionsprozess, insbesondere den Lackierprozess, durchläuft mit insbesondere qualitätsrelevanten Prozessdaten und/oder Ergänzen des werkstückträgerspezifischen Datensatzes während ein Werkstückträger den Produktionsprozess, insbesondere den Lackierprozess, durchläuft mit insbesondere qualitätsrelevanten Prozessdaten;
- Speichern des werkstückspezifischen Datensatzes in einer Datenbank und/oder Speichern des werkstückträgerspezifischen Datensatzes in einer Datenbank.

Der Begriff "insbesondere" wird im Rahmen dieser Beschreibung und der beigefügten Ansprüche ausschließlich zur Beschreibung möglicher fakultativer und/oder optionaler Merkmale verwendet.

Unter einem werkstückspezifischen Datensatz wird im Rahmen dieser Beschreibung und der beigefügten Ansprüche insbesondere ein Datensatz verstanden, welcher einem Werkstück eindeutig zugeordnet ist.

Der werkstückspezifische Datensatz bildet insbesondere ein "digitales Werkstück" und/oder ein "digitales Abbild" eines jeweiligen Werkstücks.

Unter einem werkstückträgerspezifischen Datensatz wird im Rahmen dieser Beschreibung und der beigefügten Ansprüche insbesondere ein Datensatz verstanden, welcher einem Werkstückträger und insbesondere sämtlichen auf dem Werkstückträger angeordneten Werkstücken eindeutig zugeordnet ist, beispielsweise einem Werkstückträger und darauf angeordneten Fahrzeuganbauteilen.

Insbesondere ist es denkbar, dass auf einem Werkstückträger dabei mehrere Werkstücke, insbesondere Fahrzeuganbauteile, angeordnet sind.

Ein solcher Werkstückträger ist insbesondere ein sogenannter Skid.

Beispielsweise ist es denkbar, dass der werkstückspezifische Datensatz und/oder der werkstückträgerspezifische Datensatz zu Beginn des Produktionsprozesses, insbesondere zu Beginn des Lackierprozesses, automatisch erstellt wird, beispielsweise indem Auftragsdaten mittels eines an einem Werkstück angeordneten RFID-Chips von diesem eingelesen werden.

Der werkstückspezifische Datensatz und/oder der werkstückträgerspezifische Datensatz werden insbesondere automatisch erstellt.

Insbesondere ist es denkbar, dass der werkstückspezifische und/oder der werkstückträgerspezifische Datensatz jeweils aus einem oder mehreren Datensätzen aus vorgelagerten Prozessschritten erstellt wird.

Beispielsweise ist es denkbar, dass beim Erstellen des werkstückspezifischen Datensatzes Rohbauqualitätsdaten aus dem Rohbau einer Kraftfahrzeugfertigung zu dem werkstückspezifischen Datensatz hinzugefügt werden.

Günstig kann es ferner sein, wenn der werkstückspezifische Datensatz und/oder der werkstückträgerspezifische Datensatz nachträglich ergänzt werden, beispielsweise mittels Lackqualitätsdaten, welche beispielsweise zunächst in einem Labor ermittelt werden.

Der werkstückspezifische Datensatz und/oder der werkstückträgerspezifische Datensatz umfasst vorzugsweise einen werkstückspezifischen Auftragsdatensatz und/oder einen werkstückträgerspezifischen Auftragsdatensatz, beispielsweise eine eindeutige Werkstückidentifikationsnummer, einen Modelltyp des jeweiligen Werkstücks und/oder einen Farbcode für eine in einem Lackierprozess auf das Werkstück aufzubringende Farbe. Der werkstückspezifische Auftragsdatensatz und/oder der werkstückträgerspezifische Auftragsdatensatz umfasst beispielsweise ferner Informationen über eine Produktionsschicht, während welcher ein Werkstück und/oder ein Werkstückträger den Produktionsprozess durchläuft.

Der werkstückspezifische Datensatz und/oder der werkstückträgerspezifische Datensatz umfasst vorzugsweise ferner einen Produktionsdatensatz, welcher die Prozessdaten umfasst.

Die insbesondere qualitätsrelevanten Prozessdaten umfassen vorzugsweise physikalische oder chemische Einflussparameter für jede im Produktionsprozess auf ein Werkstück aufgebrachte Beschichtung und/oder Lackschicht.

Günstig kann es ferner sein, wenn die insbesondere qualitätsrelevanten Prozessdaten Rohbauqualitätsdaten umfassen, beispielsweise Rohbauqualitätsdaten, welche Informationen über eine Verformung eines Werkstücks und/oder über eine Oberflächenrauheit eines Werkstücks umfassen.

Der Produktionsprozess, insbesondere der Lackierprozess, umfasst vorzugsweise mehrere aufeinanderfolgende Prozessschritte.

Erfindungsgemäß ist vorgesehen, dass der werkstückspezifische Datensatz und/oder der werkstückträgerspezifische Datensatz mit Qualitätsdaten ergänzt wird, welche Informationen über Qualitätsmängel, insbesondere über Lackmängel, der jeweiligen Fahrzeugkarossiere und/oder des jeweiligen Fahrzeuganbauteils enthalten, vorzugsweise am Ende des Produktionsprozesses, insbesondere am Ende des Lackierprozesses.

Vorzugsweise werden die Qualitätsdaten im Rahmen einer Qualitätskontrolle an einer Kontrollstation am Ende des Produktionsprozesses durch einen Qualitätsprüfer ermittelt, beispielsweise mittels einer Sichtkontrolle, mittels einer automatischen Qualitätsmessstation und/oder mittels eines automatischen Fehlererfassungssystems.

Die Qualitätsdaten, mit denen der werkstückspezifische Datensatz und/oder der werkstückträgerspezifische Datensatz ergänzt wird, enthalten insbesondere Informationen über die Position, die Art, die Größe und/oder über die Anzahl von Qualitätsmängeln.

Eine Position eines Qualitätsmangels ist beispielsweise aus Koordinaten einer automatischen Qualitätsmessstation und/oder eines automatischen Fehlererfassungssystems ermittelbar.

Eine Position eines Qualitätsmangels ist beispielsweise ferner durch einen Qualitätsprüfer ermittelbar und insbesondere manuell über Gitternetz-Koordinaten eingebbar.

Qualitätsmängel, insbesondere Lackmängel, umfassen beispielsweise Lackierfehler, insbesondere Schmutzeinschlüsse, Krater, Läufer und/oder Lufteinschlüsse (Kocher), eine unterschiedliche Schichtdicke, einen unerwünschten Farbverlauf und/oder Abweichungen von einem vorgegebenen Behandlungsergebnisparameter.

Behandlungsergebnisparameter umfassen beispielsweise Folgendes: eine Dicke einer Beschichtung; eine Ebenheit einer Beschichtung; eine Gleichmäßigkeit einer Schichtdicke einer Beschichtung; eine Farbe und/oder Helligkeit einer Beschichtung; eine Härte einer Beschichtung; eine chemische Zusammensetzung einer Beschichtung, insbesondere einen Vernetzungsgrad und/oder einen Lösungsmittelgehalt, und/oder einen Verunreinigungsgrad einer Beschichtung.

Die Qualitätsdaten, mit denen der werkstückspezifische Datensatz und/oder der werkstückträgerspezifische Datensatz ergänzt wird, enthalten vorzugsweise ferner Informationen über einen Zielstatus eines Werkstücks, das heißt ob ein Werkstück nachbearbeitet werden muss, welche Nachbearbeitung durchgeführt werden muss, ob keine Nachbearbeitung notwendig ist und/oder ob eine Nachbearbeitung unmöglich ist. Als Nachbearbeitung sind beispielsweise einer oder mehrere der folgenden Nachbearbeitungsschritte denkbar: Polieren, Spot-Repair und/oder erneutes Durchlaufen des Produktionsprozesses, insbesondere des Lackierprozesses.

Die Qualitätsdaten, mit denen der werkstückspezifische Datensatz und/oder der werkstückträgerspezifische Datensatz ergänzt wird, enthalten vorzugsweise Informationen darüber, ob eine Nachbearbeitung erfolgt ist.

Es ist ferner denkbar, dass die Qualitätsdaten, mit denen der werkstückspezifische Datensatz und/oder der werkstückträgerspezifische Datensatz ergänzt wird, Informationen darüber enthalten, ob eine Nachbearbeitung nicht sinnvoll ist. Werkstücke, bei denen eine Nachbearbeitung nicht sinnvoll ist, sind insbesondere Ausschuss.

Bei einer Ausgestaltung des Verfahrens ist vorgesehen, dass Qualitätsdaten von mehreren werkstückspezifischen Datensätzen und/oder von mehreren werkstückträgerspezifischen Datensätzen mittels eines Clusterverfahrens zur Erkennung von systematischen Qualitätsmängeln automatisch in verschiedene Qualitätsmängelcluster klassifiziert werden.

Bei dem Clusterverfahren werden die Qualitätsdaten der mehreren werkstückspezifischen Datensätze und/oder der mehreren werkstückträgerspezifischen Datensätze vorzugsweise mittels einer oder mehrerer Klassifizierungsregeln klassifiziert.

Vorzugsweise werden Qualitätsdaten von werkstückspezifischen Datensätzen und/oder von werkstückträgerspezifischen Datensätzen in systematische und nicht systematische Qualitätsmängelcluster klassifiziert.

Insbesondere werden beispielsweise Qualitätsmängel mit vergleichbarer Position, Art, Größe und/oder Anzahl in ein Qualitätsmängelcluster klassifiziert.

Ferner ist es beispielsweise denkbar, dass Qualitätsmängel nach dem Zeitpunkt des Auftretens in ein Qualitätsmängelcluster klassifiziert werden.

Zur Klassifizierung der Qualitätsdaten werden vorzugsweise durch einen Experten definierte Klassifizierungsregeln und/oder erlernte Klassifizierungsregeln verwendet.

Eine durch einen Experten definierte Klassifizierungsregel umfasst beispielsweise eine definierte Anzahl von mit identischen und/oder ähnlichen Qualitätsmängeln behafteten Werkstücken innerhalb eines gleitenden Fensters einer definierten Anzahl von den Produktionsprozess durchlaufenden Werkstücken und/oder Werkstückträgern.

Beispielsweise ist es denkbar, dass Qualitätsdaten in ein systematisches Qualitätsmängelcluster klassifiziert werden, wenn innerhalb von fünf im Produktionsprozess aufeinanderfolgenden Werkstücken an drei oder mehr als drei Werkstücken identische und/oder vergleichbare Qualitätsmängel erkannt werden.

Unter identischen Qualitätsmängeln wird dabei im Rahmen dieser Beschreibung und der beigefügten Ansprüche insbesondere verstanden, dass Art, Größe, Schwere und/oder Position der Qualitätsmängel identisch ist.

Unter ähnlichen Qualitätsmängeln wird dabei im Rahmen dieser Beschreibung und der beigefügten Ansprüche insbesondere verstanden, dass Größe und/oder Position der Qualitätsmängel voneinander abweichen können, die Art der Qualitätsmängel jedoch identisch ist.

Erlernte Klassifizierungsregeln werden vorzugsweise mittels eines maschinellen Lernverfahrens aus Qualitätsdaten von werkstückspezifischen Datensätzen und/oder von werkstückträgerspezifischen Datensätzen erlernt.

Beispielsweise ist es denkbar, dass Klassifizierungsregeln mittels eines überwachten und/oder unüberwachten maschinellen Lernverfahrens erlernt werden.

Bei einem überwachten maschinellen Lernverfahren werden Qualitätsdaten von werkstückspezifischen Datensätzen und/oder von werkstückträgerspezifischen Datensätzen in systematische und nicht systematische Qualitätsmängelcluster eingeteilt. Die Einteilung erfolgt vorzugsweise über definierte Regeln und/oder über Nutzerfeedback. Durch überwachte maschinelle Lernverfahren können durch ein geeignetes "Labeling" vorzugsweise auch Qualitätstrends beziehungsweise zukünftige Qualitätsmängelcluster erkannt werden. Bei einem unüberwachten maschinellen Lernverfahren werden vorzugsweise Qualitätsdaten von werkstückspezifischen Datensätzen von Werkstücken ohne Qualitätsmangel und/oder von werkstückträgerspezifischen Datensätzen von Werkstückträgern, deren Werkstücke keinen Qualitätsmangel aufweisen, das heißt ein Normalzustand, gelernt. Kommt es zu Abweichungen von dem Normalzustand, werden diese Abweichungen erkannt.

Definierte Klassifizierungsregeln und/oder erlernte Klassifizierungsregeln sind vorzugsweise auch auf andere verfahrenstechnische Anlagen, insbesondere auf andere Lackieranlagen, übertragbar.

Die Klassifizierung der Qualitätsdaten mittels des Clusterverfahrens wird vorzugsweise kontinuierlich durchgeführt. Alternativ oder ergänzend dazu ist es denkbar, dass die Klassifizierung der Qualitätsdaten mittels des Clusterverfahrens durch Batchverarbeitung erfolgt.

Ein systematisches Qualitätsmängelcluster wird vorzugsweise ferner durch Methoden der Signalverarbeitung ermittelt.

Beispielsweise ist es denkbar, dass zur Ermittlung eines systematischen Qualitätsmängelclusters Merkmale aus der Häufigkeitsdichtefunktion der Qualitätsdaten mittels einer oder mehrerer Signalverarbeitungsmethoden verarbeitet werden, beispielsweise mittels Fourier-Transformation und/oder mittels Dichteschätzung.

Günstig kann es sein, wenn die mittels des Clusterverfahrens erkannten systematischen Qualitätsmängel einem Nutzer mittels einer Visualisierung angezeigt werden, beispielsweise als Echtzeitmeldung in einem Alarmsystem und/oder als Analysemeldung in einem Analysesystem.

Beispielsweise ist es denkbar, dass Werkstücke aufgrund der mittels des Clusterverfahrens erkannten Qualitätsmängelcluster aus dem Produktionsprozess ausgeschleust werden. Günstig kann es ferner sein, wenn eine Prozesssteuerung des Produktionsprozesses aufgrund von mittels des Clusterverfahrens erkannten Qualitätsmängelclustern angepasst wird.

Bei einer Ausgestaltung des Verfahrens ist vorgesehen, dass mittels eines Analyseverfahrens automatisch Qualitätsmängelursachen für die mittels des Clusterverfahrens erkannten und in verschiedene Qualitätsmängelcluster klassifizierten systematischen Qualitätsmängel festgestellt werden, vorzugsweise durch Analyse der insbesondere qualitätsrelevanten Prozessdaten der werkstückspezifischen Datensätze der Fahrzeugkarossieren und/oder Fahrzeuganbauteile mit systematischen Qualitätsmängeln eines jeweiligen Qualitätsmängelclusters und/oder durch Analyse der insbesondere qualitätsrelevanten Prozessdaten der werkstückträgerspezifischen Datensätze der Werkstückträger, deren Fahrzeugkarossieren und/oder Fahrzeuganbauteile systematische Qualitätsmängel eines jeweiligen Qualitätsmängelclusters aufweisen.

Vorzugsweise sind somit auch im Rahmen der Qualitätskontrolle nicht erkennbare systematische Qualitätsmängel durch Rückschlüsse aus dem Produktionsprozess erkennbar.

Bei dem Analyseverfahren werden Qualitätsmängelursachen mittels einer oder mehrerer Analyseregeln bestimmt.

Zur Bestimmung der Qualitätsmängelursachen werden vorzugsweise durch einen Experten definierte Analyseregeln und/oder erlernte Analyseregeln verwendet.

Erlernte Analyseregeln werden vorzugsweise mittels eines maschinellen Lernverfahrens erlernt.

Beispielsweise ist es denkbar, dass Analyseregeln mittels eines überwachten und/oder unüberwachten maschinellen Lernverfahrens erlernt werden.

Bei einem überwachten maschinellen Lernverfahren werden Analyseregeln über Nutzerfeedback über die Qualitätsmängelursache erlernt. Bei einem unüberwachten maschinellen Lernverfahren wird vorzugsweise ein Normalzustand von Prozessschritten des Produktionsprozesses erlernt. Kommt es zu Abweichungen von dem erlernten Normalzustand, werden diese Abweichungen erkannt.

Definierte Analyseregeln und/oder erlernte Analyseregeln sind vorzugsweise auch auf andere verfahrenstechnische Anlagen, insbesondere auf andere Lackieranlagen, übertragbar.

Bei einer Ausgestaltung des Verfahrens ist vorgesehen, dass die festgestellten Qualitätsmängelursachen Anomalien und/oder Abweichungen im Produktionsprozess, insbesondere im Lackierprozess, umfassen.

Bei einer Ausgestaltung des Verfahrens ist vorgesehen, dass mittels des Analyseverfahrens Zusammenhänge zwischen den festgestellten Qualitätsmängelursachen und den in verschiedene Qualitätsmängelcluster klassifizierten systematischen Qualitätsmängeln bestimmt werden.

Zusammenhänge zwischen den festgestellten Qualitätsmängelursachen und den in verschiedene Qualitätsmängelcluster klassifizierten systematischen Qualitätsmängeln werden vorzugsweise durch die definierten und/oder erlernten Analyseregeln bestimmt.

Zusammenhänge zwischen den festgestellten Qualitätsmängelursachen und den in verschiedene Qualitätsmängelcluster klassifizierten systematischen Qualitätsmängeln sind vorzugsweise auch auf andere verfahrenstechnische Anlagen, insbesondere Lackieranlagen, übertragbar.

Bei einer Ausgestaltung des Verfahrens ist vorgesehen, dass mittels der bestimmten Zusammenhänge bevorstehende systematische Qualitätsmängel automatisch ermittelt werden, vorzugsweise indem aus einer oder mehreren im laufenden Produktionsprozess festgestellten Anomalien und/oder Abweichungen durch die mittels des Analyseverfahrens bestimmten Zusammenhänge automatisch auf zukünftige Qualitätsmängel einer Fahrzeugkarossiere und/oder eines Fahrzeuganbauteils rückgeschlossen wird, während ein Werkstück den Produktionsprozess durchläuft.

Vorzugsweise wird das Werkstück dabei mittels des Analyseverfahrens bereits beim Durchlaufen des Produktionsprozesses einem Qualitätsmängelcluster zugeordnet.

Bei einer Ausgestaltung des Verfahrens ist vorgesehen, dass der werkstückspezifische Datensatz und/oder der werkstückträgerspezifische Datensatz in jedem einzelnen Prozessschritt mit insbesondere qualitätsrelevanten Prozessdaten ergänzt wird.

Bei einer Ausgestaltung des Verfahrens ist vorgesehen, dass als insbesondere qualitätsrelevante Prozessdaten, mittels welchen ein werkstückspezifischer Datensatz und/oder ein werkstückträgerspezifischer Datensatz ergänzt wird, ein oder mehrere der folgenden Prozessparameter verwendet werden:
- Sollzeitüberschreitungen in Prozessschritten des Produktionsprozesses;
- Während dem Durchlaufen eines Prozessschrittes des Produktionsprozesses auftretende Ereignisse;
- Rohbauqualitätsdaten einer jeweiligen Fahrzeugkarossiere und/oder eines jeweiligen Fahrzeuganbauteils;
- Anomalien und/oder Abweichungen im Produktionsprozess;
- Wetterdaten;
- Personendaten über Personen, die beim Durchlaufen eines Prozessschrittes des Produktionsprozesses an dem Prozessschritt beteiligt waren.

Günstig kann es sein, wenn einzelne oder mehrere der folgenden Prozessparameter zur Ergänzung eines jeweiligen werkstückspezifischen Datensatzes und/oder eines jeweiligen werkstückträgerspezifischen Datensatzes verwendet werden:
- Düsentemperatur in einem Trockner;
- Lackmenge;
- Lackfarbe;
- Lackcharge;
- Trajektorien von Roboterbahnen;
- Kabinentemperatur in Lackierkabinen;
- Kabinenfeuchte in Lackierkabinen;
- Badtemperaturen und Füllstand in einer Station zur kathodischen Tauchlackierung sowie in einer Vorbehandlungsstation;
- Förderbewegungen eines Werkstücks durch eine Station zur kathodischen Tauchlackierung;
- eine Konzentration von Chemikalien in einer Station zur kathodischen Tauchlackierung;
- eine elektrische Spannung in einer Station zur kathodischen Tauchlackierung;
- Temperaturen und Durchlaufzeiten in einem Trockner.

Zur Ergänzung eines jeweiligen werkstückspezifischen Datensatzes und/oder eines jeweiligen werkstückträgerspezifischen Datensatzes verwendete Prozessparameter werden vorzugsweise vorverarbeitet.

Insbesondere ist es denkbar, dass Prozessparameter mit zeitlich hoher Variabilität vorverarbeitet werden, beispielsweise mechanische, hydraulische oder elektrische Prozessparameter. Auf eine Vorverarbeitung von Prozessparametern mit zeitlich niedriger Variabilität, das heißt trägen Prozessparametern, beispielsweise von thermodynamischen Prozessparametern, kann jedoch verzichtet werden.

Unter einer Sollzeitüberschreitung wird im Rahmen dieser Beschreibung und der beigefügten Ansprüche insbesondere verstanden, dass die in einem Prozessschritt vorgegebene Sollzeit bei Durchführung des jeweiligen Prozessschrittes für ein jeweiliges Werkstück überschritten wird.

Ereignisse umfassen beispielsweise Wartungsereignisse, Alarme aus einem Steuerungssystem der verfahrenstechnischen Anlage, Informationen über Schichtwechsel, Informationen über Produktionsstopps, Informationen über Zutritte zu den Behandlungsstationen der verfahrenstechnischen Anlage, Informationen über Reinigungsunterbrechungen.

Anhand der den werkstückspezifischen Datensätzen und/oder anhand der den werkstückträgerspezifischen Datensätzen hinzugefügten Wartungsereignisse ist es beispielsweise möglich, nach einer Wartung auftretende systematische Qualitätsmängel zu identifizieren.

Rohbauqualitätsdaten umfassen insbesondere Informationen über eine Blechqualität eines Werkstücks oder von Teilen eines Werkstücks, beispielsweise von Hauben, Türen, Seitenteilen und/oder Dach.

Vorzugsweise werden ferner einzelne oder mehrere der folgenden Prozessparameter zur Ergänzung eines jeweiligen werkstückspezifischen Datensatzes und/oder eines jeweiligen werkstückträgerspezifischen Datensatzes verwendet:
- Fördertechnikinformationen
- Standzeiten eines Werkstücks im Produktionsprozess;
- "Übernachten" eines Werkstücks innerhalb der verfahrenstechnischen Anlage.

Beispielsweise wird die Standzeit eines Werkstücks in einem Trockner zur Ergänzung eines jeweiligen werkstückspezifischen Datensatzes verwendet. So kann insbesondere aus einer Sollzeitüberschreitung für die Anwesenheit des Werkstücks in einem Trockner auf Qualitätsmängel geschlossen werden. Günstig kann es ferner sein, wenn die Standzeit eines Werkstückträgers in einem Trockner zur Ergänzung eines jeweiligen werkstückträgerspezifischen Datensatzes verwendet wird.

Unter Abweichungen im Produktionsprozess wird im Rahmen dieser Beschreibung und der beigefügten Ansprüche vorzugsweise eine Abweichung von Zuständen von einem Soll-Zustand oder eine Abweichung von einem gemessenen Prozesswert von einem vorgegebenen Prozesswert verstanden.

Anomalien werden vorzugsweise automatisch aus Abweichungen zwischen Ist-Prozesswerten und Soll-Prozessfenstern in den Prozessschritten des Produktionsprozesses ermittelt. Alternativ oder ergänzend dazu ist es denkbar, dass Anomalien automatisch aus Abweichungen zwischen Ist-Prozesswerten eines Prozessschrittes des Produktionsprozesses und einem mittels eines maschinellen Lernverfahrens gelernten Normalzustand für den jeweiligen Prozessschritt ermittelt werden.

Anomalien im Produktionsprozess werden vorzugsweise ferner mittels einem oder mehrerer unterlagerter Mikrosystem-Analyse-Systeme ermittelt, insbesondere unterteilt auf eine Mikroebene, das heißt auf eine Werkstückebene, und/oder auf eine Makroebene, das heißt auf eine Ebene der verfahrenstechnischen Anlage.

Bei einer Ausgestaltung des Verfahrens ist vorgesehen, dass der werkstückspezifische Datensatz und/oder der werkstückträgerspezifische Datensatz mit Prozessfehlerdaten, welche Informationen über eine Anomalie und/oder Abweichung in einem Prozessschritt des Produktionsprozesses enthalten, ergänzt wird, während eine Fahrzeugkarossiere und/oder ein Fahrzeuganbauteil und/oder ein Werkstückträger den Prozessschritt des Produktionsprozesses durchläuft.

Die Prozessfehlerdaten sind insbesondere "Fehlermarker".

Vorzugsweise werden nicht nur werkstückspezifische Datensätze von Werkstücken, welche während des Produktions- und/oder Förderstopps in einer bestimmten Behandlungsstation angeordnet waren, mit Prozessfehlerdaten ergänzt. Vielmehr ist es denkbar, dass auch werkstückspezifische Datensätze von weiteren Werkstücken, welche aufgrund des Produktions- und/oder Förderstopps ebenfalls länger in einer bestimmten Behandlungsstation angeordnet waren, mit Prozessfehlerdaten ergänzt werden.

Vorzugsweise werden ferner nicht nur werkstückträgerspezifische Datensätze von Werkstückträgern, welche während des Produktions- und/oder Förderstopps in einer bestimmten Behandlungsstation angeordnet waren, mit Prozessfehlerdaten ergänzt. Es ist insbesondere denkbar, dass auch werkstückträgerspezifische Datensätze von weiteren Werkstückträgern, welche aufgrund des Produktions- und/oder Förderstopps ebenfalls länger in einer bestimmten Behandlungsstation angeordnet waren, mit Prozessfehlerdaten ergänzt werden.

Mittels der Prozessfehlerdaten sind Anomalien und/oder Abweichungen in einem Prozessschritt des Produktionsprozesses vorzugsweise als Fehler identifizierbar.

Vorzugsweise ist durch die Verwendung von Prozessfehlerdaten zur Identifikation von Anomalien und/oder Abweichungen im werkstückspezifischen Datensatz und/oder im werkstückträgerspezifischen Datensatz eine Größe des werkstückspezifischen Datensatzes und/oder eine Größe des werkstückträgerspezifischen Datensatzes reduzierbar.

Vorzugsweise sind Anomalien und/oder Abweichungen in einem Prozessschritt des Produktionsprozesses mittels der Prozessfehlerdaten als Qualitätsmängelursache identifizierbar.

Anomalien und/oder Abweichungen in einem Prozessschritt des Produktionsprozesses sind einem mittels eines Clusterverfahrens klassifizierten systematischen Qualitätsmangel mittels der Prozessfehlerdaten vorzugsweise automatisiert zuordenbar, insbesondere mittels eines Analyseverfahrens.

Bei einer Ausgestaltung des Verfahrens ist vorgesehen, dass das Verfahren in einer verfahrenstechnischen Anlage, insbesondere in einer Lackieranlage, durchgeführt wird, welche mehrere voneinander verschiedene Behandlungsstationen umfasst, in welchen jeweils einzelne oder mehrere Prozessschritte des Produktionsprozesses, insbesondere des Lackierprozesses, durchführbar sind.

Vorzugsweise werden in jeder Behandlungsstation für jeden Prozessschritt des Produktionsprozesses ein oder mehrere insbesondere qualitätsrelevante Prozessdaten erfasst.

Bei einer Ausgestaltung des Verfahrens ist vorgesehen, dass der werkstückspezifische Datensatz und/oder der werkstückträgerspezifische Datensatz kontinuierlich oder diskontinuierlich mit den insbesondere qualitätsrelevanten Prozessdaten ergänzt wird.

Bei einer Ausgestaltung des Verfahrens ist vorgesehen, dass der werkstückspezifische Datensatz und/oder der werkstückträgerspezifische Datensatz jeweils mit insbesondere qualitätsrelevanten Prozessdaten ergänzt wird, welche jeweils einen Zeitstempel umfassen, mittels welchem die jeweiligen Prozessdaten einem Zeitpunkt und/oder einem Prozessschritt des Produktionsprozesses eindeutig zuordenbar sind.

Bei einer Ausgestaltung des Verfahrens ist vorgesehen, dass der ergänzte werkstückspezifische Datensatz einer Fahrzeugkarossiere und/oder eines Fahrzeuganbauteils und/oder der ergänzte werkstückträgerspezifische Datensatz eines Werkstückträgers in einer Datenbank gespeichert wird während und/oder nachdem eine Fahrzeugkarossiere und/oder ein Fahrzeuganbauteil und/oder ein Werkstückträger den Produktionsprozess durchlaufen hat.

Die vorliegende Erfindung betrifft ferner ein Qualitätsanalysesystem zur Analyse von Qualitätsmängeln von Werkstücken, welche Fahrzeugkarossieren und/oder von Fahrzeuganbauteile sind, insbesondere nach und/oder bei dem Durchlaufen eines Produktionsprozesses in verfahrenstechnischen Anlagen, insbesondere nach und/oder bei dem Durchlaufen eines Lackierprozesses in Lackieranlagen.

Der vorliegenden Erfindung liegt die weitere Aufgabe zugrunde, ein Qualitätsanalysesystem zur Analyse von Qualitätsmängeln von Werkstücken, vorzugsweise von Fahrzeugkarossieren und/oder von Fahrzeuganbauteilen, insbesondere nach und/oder bei dem Durchlaufen eines Produktionsprozesses in verfahrenstechnischen Anlagen, vorzugsweise nach und/oder bei dem Durchlaufen eines Lackierprozesses in Lackieranlagen, bereitzustellen, mittels welchem Qualitätsmängel vermieden werden können und/oder mittels welchem Qualitätsmängelursachen im Produktionsprozess ermittelt, vermieden und/oder behoben werden können.

Diese Aufgabe wird erfindungsgemäß durch ein Qualitätsanalysesystem zur Analyse von Qualitätsmängeln von Werkstücken, vorzugsweise von Fahrzeugkarossieren und/oder von Fahrzeuganbauteilen, insbesondere nach und/oder bei dem Durchlaufen eines Produktionsprozesses in verfahrenstechnischen Anlagen, vorzugsweise nach und/oder bei dem Durchlaufen eines Lackierprozesses in Lackieranlagen, mit den Merkmalen des Anspruchs 12 gelöst.

Das Qualitätsanalysesystem umfasst vorzugsweise Folgendes:
- eine Schnittstelle zur Kommunikation mit einem Steuerungssystem einer verfahrenstechnischen Anlage, insbesondere einer Lackieranlage;
- eine Steuereinrichtung, welche derart eingerichtet und ausgebildet ist, dass das Verfahren gemäß einem der Ansprüche 1 bis 11 mittels der Steuereinrichtung ausführbar ist.

Die vorliegende Erfindung betrifft ferner eine verfahrenstechnische Anlage, insbesondere eine Lackieranlage, welche Folgendes umfasst:
- ein Steuerungssystem, mittels welchem ein Produktionsprozess, insbesondere ein Lackierprozess, steuerbar ist;
- ein erfindungsgemäßes Qualitätsanalysesystem.

Die verfahrenstechnische Anlage umfasst vorzugsweise mehrere Behandlungsstationen, insbesondere mehrere Lackierstationen.

Beispielsweise ist es denkbar, dass die Lackieranlage eine Lackierlinie mit mehreren miteinander verketteten Behandlungsstationen umfasst.

Alternativ oder ergänzend dazu ist es denkbar, dass die Lackieranlage mehrere Behandlungsboxen umfasst, wobei jede Behandlungsbox eine oder mehrere Behandlungsstationen umfasst.

Die Lackieranlage umfasst vorzugsweise eine oder mehrere der folgenden Behandlungsstationen:
- Vorbehandlungsstation;
- Station zur kathodischen Tauchlackierung;
- Trockner nach der Station zur kathodischen Tauchlackierung;
- Primer-Kabine;
- Primer-Trockner;
- Base-Coat-Kabine;
- Base-Coat-Trockner;
- Clear-Coat-Kabine;
- Clear-Coat-Trockner.

Weitere Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer verfahrenstechnischen Anlage, insbesondere einer Lackieranlage;
- Fig. 2: eine schematische Darstellung einer Ausführungsform von werkstückspezifischen Datensätzen mehrerer Werkstücke;
- Fig. 3: eine schematische Darstellung eines Clusterverfahrens zur Klassifizierung von Qualitätsdaten der werkstückspezifischen Datensätze aus Fig. 2;
- Fig. 4: eine schematische Darstellung einer weiteren Ausführungsform von werkstückspezifischen Datensätzen mehrerer Werkstücke;
- Fig. 5: eine schematische Darstellung eines Clusterverfahrens zur Klassifizierung von Qualitätsdaten der werkstückspezifischen Datensätze aus Fig. 4;
- Fig. 6: eine schematische Darstellung einer weiteren Ausführungsform von werkstückspezifischen Datensätzen mehrerer Werkstücke;
- Fig. 7: eine schematische Darstellung eines Clusterverfahrens zur Klassifizierung von Qualitätsdaten der werkstückspezifischen Datensätze aus Fig. 6; und
- Fig. 8: eine schematische Darstellung einer Visualisierung von mittels eines Clusterverfahrens erkannten systematischen Qualitätsmängeln.

Gleiche oder funktional äquivalente Elemente sind in sämtlichen Figuren mit denselben Bezugszeichen versehen.

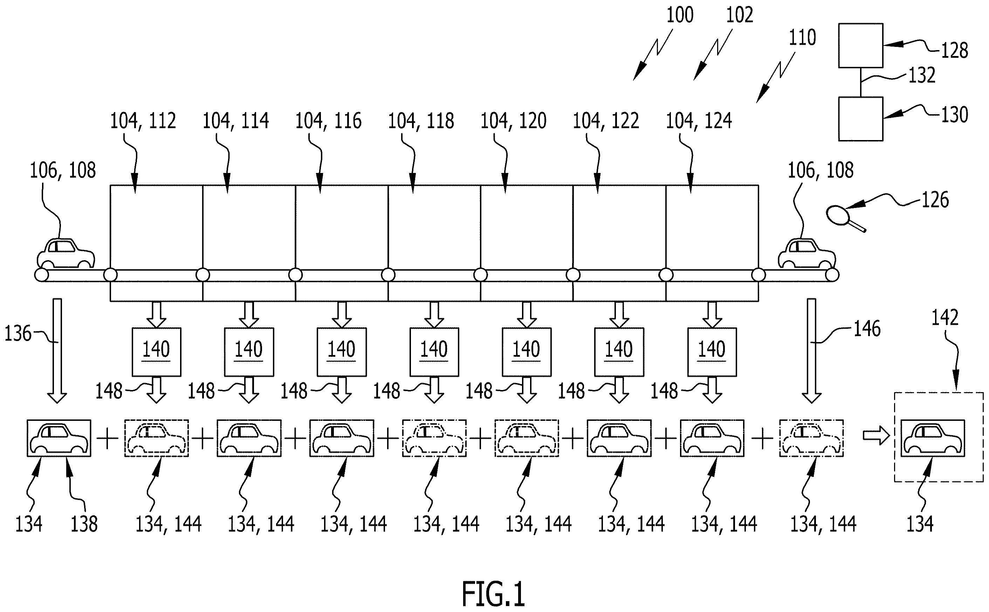

Fig. 1 zeigt eine als Ganzes mit 100 bezeichnete verfahrenstechnische Anlage.

Die verfahrenstechnische Anlage 100 ist insbesondere eine Lackieranlage 102.

Die verfahrenstechnische Anlage 100 umfasst vorzugsweise mehrere Behandlungsstationen 104.

Vorliegend umfasst die verfahrenstechnische Anlage 100, insbesondere die Lackieranlage 102, sieben Behandlungsstationen 104.

Vorzugsweise ist mittels der verfahrenstechnischen Anlage 100 ein Produktionsprozess an Werkstücken 106, insbesondere an Fahrzeugkarosserien 108 und/oder an Fahrzeuganbauteilen, durchführbar.

Insbesondere sind in den Behandlungsstationen 104 jeweils einzelne oder mehrere Prozessschritte des Produktionsprozesses durchführbar.

Die in Fig. 1 dargestellte verfahrenstechnische Anlage 100, insbesondere die Lackieranlage 102, ist vorliegend insbesondere eine Lackierlinie 110.

In der Lackierlinie 110 sind die Behandlungsstationen 104 vorzugsweise miteinander verkettet.

Beispielsweise ist es denkbar, dass ein Werkstück 106 und/oder ein Werkstückträger folgende Behandlungsstationen 104 in der angegebenen Reihenfolge durchläuft.

Dabei ist es beispielsweise denkbar, dass nur ein einzelnes Werkstück 106, beispielsweise eine Fahrzeugkarosserie 108, auf einem zeichnerisch nicht dargestellten Werkstückträger angeordnet ist, während das Werkstück 106 die Behandlungsstationen 104 durchläuft.

Alternativ oder ergänzend dazu ist es denkbar, dass mehrere Werkstücke 106, beispielsweise zeichnerisch nicht dargestellte Fahrzeuganbauteile, gemeinsam auf einem Werkstückträger angeordnet sind, während der Werkstückträger mit den darauf angeordneten Werkstücken 106 die Behandlungsstationen 104 durchläuft.

Ein Werkstück 106, beispielsweise eine Fahrzeugkarosserie 108, wird in einer Vorbehandlungsstation 112 vorbehandelt und von der Vorbehandlungsstation 112 zu einer Station zur kathodischen Tauchlackierung 114 gefördert.

Von der Station zur kathodischen Tauchlackierung 114 wird das Werkstück 106 nach Aufbringen einer Beschichtung auf dasselbe zu einem Trockner 116 nach der Station zur kathodischen Tauchlackierung 114 gefördert.

Nach dem Trocknen der in der Station zu kathodischen Tauchlackierung 114 auf das Werkstück 106 aufgebrachten Beschichtung in dem Trockner 116 wird das Werkstück 106 vorzugsweise in eine Base-Coat-Kabine 118 gefördert, in welcher wiederum eine Beschichtung auf das Werkstück 106 aufgebracht wird.

Nach dem Aufbringen der Beschichtung in der Base-Coat-Kabine 118 wird das Werkstück 106 vorzugsweise in einen Base-Coat-Trockner 120 gefördert.

Nach dem Trocknen der in der Base-Coat-Kabine 118 auf das Werkstück 106 aufgebrachten Beschichtung in dem Base-Coat-Trockner 120 wird das Werkstück 106 vorzugsweise in eine Clear-Coat-Kabine 122 gefördert, in welcher eine weitere Beschichtung auf das Werkstück 106 aufgebracht wird.

Nach dem Aufbringen der Beschichtung in der Clear-Coat-Kabine 122 wird das Werkstück 106 vorzugsweise einem Clear-Coat-Trockner 124 zugeführt.

Nach dem Trocknen der in der Clear-Coat-Kabine 122 auf das Werkstück 106 aufgebrachten Beschichtung in dem Clear-Coat-Trockner 124 wird das Werkstück 106 vorzugsweise einer Kontrollstation 126 am Ende des Produktionsprozesses zugeführt.

In der Kontrollstation 126 wird vorzugsweise eine Qualitätskontrolle durch einen Qualitätsprüfer durchgeführt, beispielsweise mittels einer Sichtkontrolle.

Die verfahrenstechnische Anlage 100, insbesondere die Lackieranlage 102, umfasst vorzugsweise ferner ein Steuerungssystem 128, mittels welchem der Produktionsprozess, insbesondere der Lackierprozess, in den Behandlungsstationen 104 steuerbar ist.

Günstig kann es ferner sein, wenn die verfahrenstechnische Anlage 100, insbesondere die Lackieranlage 102, ein Qualitätsanalysesystem 130 umfasst.

Das Qualitätsanalysesystem 130 umfasst vorzugsweise eine Schnittstelle 132 zur Kommunikation mit dem Steuerungssystem 128 der verfahrenstechnischen Anlage 100, insbesondere der Lackieranlage 102.

Das Qualitätsanalysesystem 130 ist vorzugsweise zur Analyse von Qualitätsmängeln der Werkstücke 106, insbesondere der Fahrzeugkarosserie 108 und/oder von Fahrzeuganbauteilen, ausgebildet.

Vorzugsweise wird mittels des Steuerungssystems 128 und/oder mittels des Qualitätsanalysesystems 130 zu Beginn des Produktionsprozesses, insbesondere zu Beginn des Lackierprozesses, ein einem Werkstück 106 eindeutig zugeordneter werkstückspezifischer Datensatz 134 erstellt.

Werkstückspezifische Datensätze 134 von Werkstücken 106 bilden vorzugsweise jeweils ein "digitales Werkstück" und/oder ein "digitales Abbild" eines jeweiligen Werkstücks 106.

Zu Beginn des Produktionsprozesses, insbesondere zu Beginn des Lackierprozesses, wird der werkstückspezifische Datensatz 134 vorzugsweise automatisch erstellt, beispielsweise indem Auftragsdaten 136 mittels eines beispielsweise an einem Werkstück 106 angeordneten und in den Figuren zeichnerisch nicht dargestellten RFID-Chips eingelesen werden.

Der werkstückspezifische Datensatz 134 umfasst somit vorzugsweise einen werkstückspezifischen Auftragsdatensatz 138, beispielsweise eine eindeutige Werkstückidentifikationsnummer, einen Modelltyp des jeweiligen Werkstücks 106 und/oder einen Farbcode für eine in einem Lackierprozess auf das Werkstück 106 aufzubringende Farbe.

Günstig kann es ferner sein, wenn ein werkstückspezifischer Datensatz 134 mit insbesondere qualitätsrelevanten Prozessdaten 140 ergänzt wird, während ein Werkstück 106 den Produktionsprozess, insbesondere den Lackierprozess, durchläuft.

Ein jeweiliger werkstückspezifischer Datensatz 134 wird vorzugsweise in einer Datenbank 142 gespeichert. Insbesondere wird der ergänzte werkstückspezifische Datensatz 134 eines Werkstücks 106 in der Datenbank 142 gespeichert während und/oder nachdem ein Werkstück 106 den Produktionsprozess durchlaufen hat.

Ein werkstückspezifischer Datensatz 134 umfasst durch die Ergänzung mit Prozessdaten 140 vorzugsweise ferner einen Produktionsdatensatz 144, welcher die Prozessdaten 140 umfasst.

Günstig kann es sein, wenn der werkstückspezifische Datensatz 134 in jedem einzelnen Prozessschritt des Produktionsprozesses mit insbesondere qualitätsrelevanten Prozessdaten 140 ergänzt wird.

Die Prozessdaten 140, insbesondere die qualitätsrelevanten Prozessdaten 140, mit welchen ein jeweiliger werkstückspezifischer Datensatz 134 eines Werkstücks 106 ergänzt wird, umfassen vorzugsweise jeweils einen Zeitstempel, mittels welchem die jeweiligen Prozessdaten einem Zeitpunkt und/oder einem Prozessschritt des Produktionsprozesses eindeutig zuordenbar sind.

Die insbesondere qualitätsrelevanten Prozessdaten 140 umfassen vorzugsweise physikalische oder chemische Einflussparameter für jede im Produktionsprozess auf ein Werkstück 106 aufgebrachte Beschichtung und/oder Lackschicht.

Der werkstückspezifische Datensatz 134 eines jeweiligen Werkstücks 106 wird vorzugsweise mit Qualitätsdaten 146 ergänzt, welche Informationen über Qualitätsmängel, insbesondere über Lackmängel, des jeweiligen Werkstücks 106 enthalten.

Insbesondere kann vorgesehen sein, dass der werkstückspezifische Datensatz 134 mit den Qualitätsdaten 146 am Ende des Produktionsprozesses, insbesondere am Ende des Lackierprozesses, ergänzt wird.

Die Qualitätsdaten 146 werden vorzugsweise im Rahmen einer Qualitätskontrolle an der Kontrollstation 126 durch einen Qualitätsprüfer ermittelt, beispielsweise mittels einer Sichtkontrolle.

Beispielsweise ist es denkbar, dass die Qualitätsdaten 146 Informationen über die Position, die Art, die Größe und/oder über die Anzahl von Qualitätsmängeln eines jeweiligen Werkstücks 106 enthalten.

Qualitätsmängel, insbesondere Lackmängel, umfassen dabei beispielsweise Lackierfehler, insbesondere Schmutzeinschlüsse, Krater, Läufer und/oder Lufteinschlüsse (Kocher), eine unterschiedliche Schichtdicke, einen unerwünschten Farbverlauf und/oder Abweichungen von einem vorgegebenen Behandlungsergebnisparameter.

Behandlungsergebnisparameter umfassen beispielsweise Folgendes: eine Dicke einer Beschichtung; eine Ebenheit einer Beschichtung; eine Gleichmäßigkeit einer Schichtdicke einer Beschichtung; eine Farbe und/oder Helligkeit einer Beschichtung; eine Härte einer Beschichtung; eine chemische Zusammensetzung einer Beschichtung, insbesondere einen Vernetzungsgrad und/oder einen Lösungsmittelgehalt, und/oder einen Verunreinigungsgrad der Beschichtung.

Die Qualitätsdaten 146, mit denen der werkstückspezifische Datensatz 134 eines jeweiligen Werkstücks 106 ergänzt wird, enthalten vorzugsweise ferner Informationen über einen Zielstatus eines jeweiligen Werkstücks 106.

Vorzugsweise enthalten die Qualitätsdaten 146 dabei Informationen darüber, ob ein Werkstück 106 nachbearbeitet werden muss, welche Nachbearbeitung durchgeführt werden muss, ob keine Nachbearbeitung notwendig ist und/oder ob eine Nachbearbeitung unmöglich ist.

Als Nachbearbeitung sind beispielsweise einer oder mehrere der folgenden Nachbearbeitungsschritte denkbar: Polieren, Spot-Repair und/oder erneutes Durchlaufen des Produktionsprozesses, insbesondere des Lackierprozesses.

Als Prozessdaten 140, insbesondere als qualitätsrelevante Prozessdaten 140, mittels welchen ein werkstückspezifischer Datensatz 134 ergänzt wird, werden vorzugsweise eine oder mehrere der folgenden Prozessparameter verwendet:
- Sollzeitüberschreitungen in Prozessschritten des Produktionsprozesses;
- während dem Durchlaufen eines Prozessschrittes des Produktionsprozesses auftretende Ereignisse;
- Rohbauqualitätsdaten eines jeweiligen Werkstücks;
- Anomalien und/oder Abweichungen im Produktionsprozess;
- Wetterdaten;
- Personendaten über Personen, die beim Durchlaufen eines Prozessschrittes des Produktionsprozesses an dem Prozessschritt beteiligt waren.

Rohbauqualitätsdaten umfassen insbesondere Informationen über eine Blechqualität eines Werkstücks 106 oder von Teilen eines Werkstücks 106, beispielsweise von Hauben, Türen, Seitenteilen und/oder Dach.

Günstig kann es sein, wenn einzelne oder mehrere der folgenden Prozessparameter zur Ergänzung eines jeweiligen werkstückspezifischen Datensatzes 134 verwendet werden:
- Düsentemperatur in einem Trockner 116, 120, 124;
- Lackmenge;
- Lackfarbe;
- Lackcharge;
- Trajektorien von Roboterbahnen;
- Kabinentemperaturen in den Lackierkabinen 118, 122;
- Kabinenfeuchten in den Lackierkabinen 118, 122;
- Badtemperaturen und Füllstand in der Station zur kathodischen Tauchlackierung 114 sowie in der Vorbehandlungsstation 112;
- Förderbewegungen eines Werkstücks durch die Station zur kathodischen Tauchlackierung 114;
- eine Konzentration von Chemikalien in der Station zur kathodischen Tauchlackierung 114;
- eine elektrische Spannung in der Station zur kathodischen Tauchlackierung 114;
- Temperaturen und Durchlaufzeiten in einem Trockner 116, 120, 124.

Zur Ergänzung eines jeweiligen werkstückspezifischen Datensatzes 134 verwendete Prozessparameter werden vorzugsweise vorverarbeitet.

Insbesondere ist es denkbar, dass Prozessparameter mit zeitlich hoher Variabilität vorverarbeitet werden, beispielsweise mechanische, hydraulische oder elektrische Prozessparameter. Auf eine Vorverarbeitung von Prozessparametern mit zeitlich niedriger Variabilität, das heißt trägen Prozessparametern, beispielsweise von thermodynamischen Prozessparametern, kann jedoch vorzugsweise verzichtet werden.

Ereignisse umfassen beispielsweise Wartungsereignisse, Alarme aus dem Steuerungssystem 128 der verfahrenstechnischen Anlage 100, Informationen über Schichtwechsel, Informationen über Produktionsstopps, Informationen über Zutritte zu den Behandlungsstationen 104 der verfahrenstechnischen Anlage 100, Informationen über Reinigungsunterbrechungen.

Anhand der den werkstückspezifischen Datensätzen 134 hinzugefügten Wartungsereignisse ist es beispielsweise möglich, nach einer Wartung auftretende systematische Qualitätsmängel zu identifizieren.

Vorzugsweise werden ferner einzelne oder mehrere der folgenden Prozessparameter zur Ergänzung eines jeweiligen werkstückspezifischen Datensatzes 134 verwendet:
- Fördertechnikinformationen
- Standzeiten eines Werkstücks 106 im Produktionsprozess;
- "Übernachten" eines Werkstücks 106 innerhalb der verfahrenstechnischen Anlage 100, beispielsweise innerhalb eines Trockners 116, 120, 124.

Beispielsweise wird die Standzeit eines Werkstücks 106 in einem Trockner 116, 120, 124 zur Ergänzung eines jeweiligen werkstückspezifischen Datensatzes 134 verwendet. So kann insbesondere aus einer Sollzeitüberschreitung für die Anwesenheit des Werkstücks 106 in einem Trockner 116, 120, 124 auf Qualitätsmängel geschlossen werden.

Anomalien werden vorzugsweise automatisch aus Abweichungen zwischen Ist-Prozesswerten und Soll-Prozessfenstern in den Prozessschritten des Produktionsprozesses ermittelt. Die Ist-Prozesswerte werden beispielsweise mittels eines oder mehrerer zeichnerisch nicht dargestellter Sensoren in den Behandlungsstationen 106 ermittelt.

Alternativ oder ergänzend dazu ist es denkbar, dass Anomalien automatisch aus Abweichungen zwischen Ist-Prozesswerten eines Prozessschrittes des Produktionsprozesses und einem mittels eines maschinellen Lernverfahrens gelernten Normalzustand für den jeweiligen Prozessschritt ermittelt werden.

Vorzugsweise wird der werkstückspezifische Datensatz 134 im Falle von Anomalien und/oder Abweichungen in einem Prozessschritt des Produktionsprozesses mit Prozessfehlerdaten 148 ergänzt, insbesondere während ein Werkstück 106 den jeweiligen Prozessschritt des Produktionsprozesses durchläuft.

Die Prozessfehlerdaten 148 enthalten vorzugsweise Informationen über eine Anomalie und/oder eine Abweichung in einem Prozessschritt des Produktionsprozesses.

Die Prozessfehlerdaten 148 sind insbesondere "Fehlermarker". Beispielsweise ist mittels der Prozessfehlerdaten 148 das Vorliegen oder Nichtvorliegen von Anomalien und/oder Abweichungen in einem jeweiligen Prozessschritt beim Durchlaufen des Prozessschrittes durch ein Werkstück 106 markierbar.

Mittels der Prozessfehlerdaten 148 sind vorzugsweise Anomalien und/oder Abweichungen in einem jeweiligen Prozessschritt des Produktionsprozesses als Fehler identifizierbar.

Durch die Verwendung von Prozessfehlerdaten 148 zur Identifikation von Anomalien und/oder Abweichungen in den Prozessdaten 140 des werkstückspezifischen Datensatzes 134 ist vorzugsweise eine Größe des werkstückspezifischen Datensatzes 134 reduzierbar.

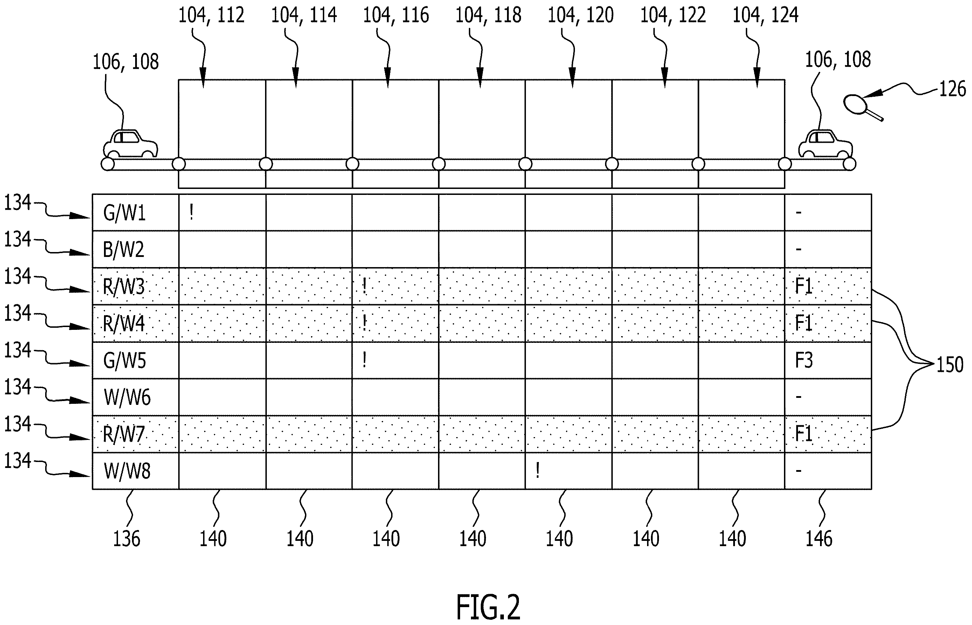

Fig. 2 zeigt eine Ausführungsform von werkstückspezifischen Datensätzen 134 verschiedener Werkstücke 106.

In der ersten Spalte sind beispielsweise die Auftragsdaten 136 eines jeweiligen werkstückspezifischen Datensatzes 134 dargestellt, beispielsweise in Form eines Farbcodes und/oder in Form einer Werkstückidentifikationsnummer.

In den Spalten zwei bis sieben sind jeweils Prozessdaten 140 eines jeweiligen werkstückspezifischen Datensatzes 134 aus den Prozessschritten des Produktionsprozesses in den Behandlungsstationen 104 der verfahrenstechnischen Anlage 100, insbesondere der Lackieranlage 102, dargestellt.

Mittels eines Ausrufezeichens sind insbesondere Prozessfehlerdaten 148, das heißt "Fehlermarker" dargestellt, welche Informationen über Anomalien und/oder Abweichungen in Prozessschritten des Produktionsprozesses enthalten.

In Spalte neun sind ferner Qualitätsdaten 146 dargestellt, welche vorzugsweise Informationen über die Position, die Art, die Größe und/oder über die Anzahl von Qualitätsmängeln enthalten.

Beispielsweise wurde für das Werkstück W1 eine Anomalie und/oder Abweichung in der Vorbehandlungsstation 112 als Prozessfehlerdaten 148 hinterlegt.

Für die Werkstücke W3 bis W5 wurde beispielsweise eine Anomalie und/oder Abweichung in dem Trockner 116 nach der Station zur kathodischen Tauchlackierung 114 festgestellt und mittels Prozessfehlerdaten 148 gekennzeichnet.

Für das Werkstück W8 wurde ferner beispielsweise eine Anomalie und/oder Abweichung in dem Base-Coat-Trockner 120 mittels Prozessfehlerdaten 148 gekennzeichnet.

Die Qualitätsdaten 146, welche Informationen über in der Kontrollstation 126 erkannte Qualitätsmängel umfassen, werden beispielsweise in der neunten Spalte hinterlegt. Beispielsweise enthalten die Qualitätsdaten vorliegend Informationen über die Art der Qualitätsmängel 146.

Vorzugsweise werden Qualitätsdaten 146 von mehreren werkstückspezifischen Datensätzen 134 mittels eines Clusterverfahrens zur Erkennung von systematischen Qualitätsmängeln automatisch mittels des Qualitätsanalysesystems 130 in verschiedene Qualitätsmängelcluster 150 klassifiziert.

Die Qualitätsdaten 146 der werkstückspezifischen Datensätze 134 werden bei dem Clusterverfahren vorzugsweise mittels einer oder mehrerer Klassifizierungsregeln klassifiziert.

Günstig kann es sein, wenn die Qualitätsdaten 146 der werkstückspezifischen Datensätze 134 dabei in systematische und nicht systematische Qualitätsmängelcluster 150 klassifiziert werden.

Zur Klassifizierung der Qualitätsdaten 146 werden vorzugsweise durch einen Experten definierte Klassifizierungsregeln und/oder erlernte Klassifizierungsregeln verwendet.

Eine durch einen Experten definierte Klassifizierungsregel umfasst beispielsweise eine definierte Anzahl von mit identischen und/oder ähnlichen Qualitätsmängeln behafteten Werkstücken 106 innerhalb eines gleitenden Fensters einer definierten Anzahl von den Produktionsprozess durchlaufenden Werkstücken 106.

Vorliegend werden Qualitätsdaten 146 von werkstückspezifischen Datensätzen 134 in ein systematisches Qualitätsmängelcluster 150 klassifiziert, wenn innerhalb von fünf im Produktionsprozess aufeinanderfolgenden Werkstücken 106 an drei oder mehr als drei Werkstücken 106 identische und/oder vergleichbare Qualitätsmängel erkannt werden.

Erlernte Klassifizierungsregeln werden vorzugsweise mittels eines maschinellen Lernverfahrens aus Qualitätsdaten 146 von werkstückspezifischen Datensätzen 134 erlernt.

Dabei können Klassifizierungsregeln mittels eines überwachten und/oder unüberwachten maschinellen Lernverfahrens erlernt werden.

Vorzugsweise wird die Klassifizierung der Qualitätsdaten 146 mittels des Clusterverfahrens kontinuierlich durchgeführt. Alternativ oder ergänzend dazu ist es möglich, dass die Klassifizierung der Qualitätsdaten 146 mittels des Clusterverfahrens durch Batchverarbeitung erfolgt.

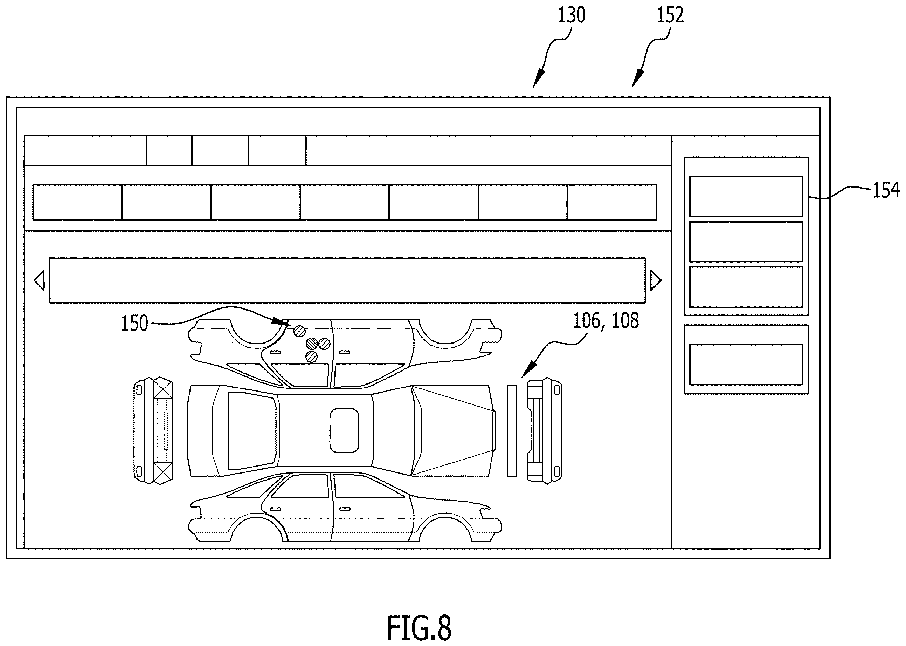

Vorzugsweise werden mittels des Clusterverfahrens erkannte systematische Qualitätsmängel einem Nutzer mittels einer in Fig. 8 dargestellten Visualisierung 152 des Qualitätsanalysesystems 130 angezeigt, beispielsweise als Echtzeitmeldung in einem Alarmsystem und/oder als Analysemeldung in einem Analysesystem.

Bei der in Fig. 8 dargestellten Visualisierung 152 sind sämtliche Qualitätsmängel des Qualitätsmängelclusters 150 an einer Seitentür auf der linken Seite des Werkstücks 106, insbesondere der Fahrzeugkarosserie 108, angeordnet.

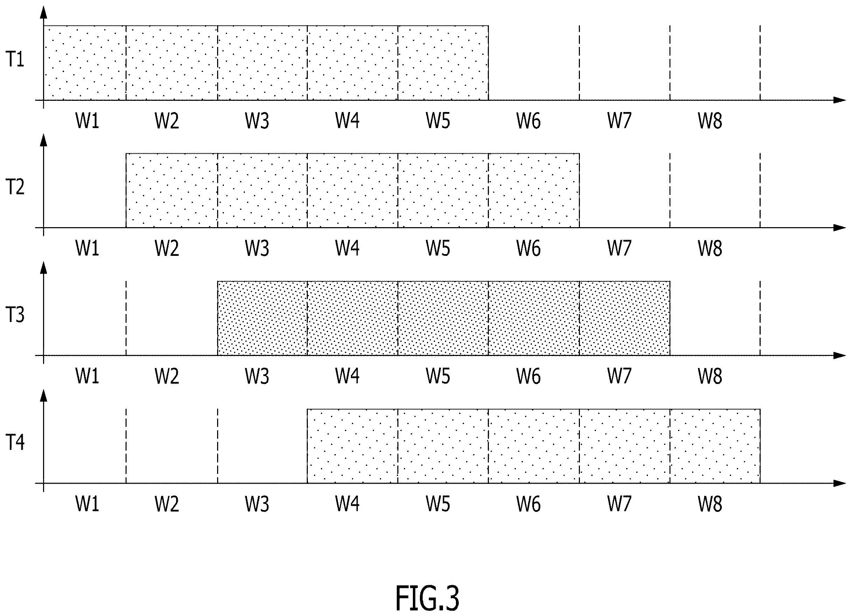

Fig. 3 zeigt die Durchführung des Clusterverfahrens für die in Fig. 2 dargestellten werkstückspezifischen Datensätze 134.

Zu den Zeitpunkten T1 und T2 wurde durch das Qualitätsanalysesystem 130 noch kein Qualitätsmängelcluster 150 mit systematischen Qualitätsmängeln erkannt.

Zu dem Zeitpunkt T3 wird mittels des Qualitätsanalysesystems 130 ein Qualitätsmängelcluster 150 erkannt, da die Qualitätsdaten 146 der werkstückspezifischen Datensätze 134 der Werkstücke W3, W4 und W7 jeweils den identischen Qualitätsmangel F1 enthalten.

Beispielsweise ist es denkbar, dass Werkstücke 106 aufgrund der mittels des Clusterverfahrens erkannten Qualitätsmängelcluster 150 aus dem Produktionsprozess ausgeschleust werden. Alternativ oder ergänzend dazu ist es möglich, dass eine Prozesssteuerung des Produktionsprozesses mittels des Steuerungssystems 128 aufgrund von mittels des Clusterverfahrens erkannten Qualitätsmängelclustern 150 angepasst wird.

Vorzugsweise werden mittels eines Analyseverfahrens automatisch Qualitätsmängelursachen für die mittels des Clusterverfahrens erkannten und in verschiedene Qualitätsmängelcluster 150 klassifizierten systematischen Qualitätsmängel festgestellt. Vorzugsweise werden dabei die insbesondere qualitätsrelevanten Prozessdaten 140 der werkstückspezifischen Datensätze 134 der Werkstücke W3, W4 und W7 mit systematischen Qualitätsmängeln des Qualitätsmängelclusters 150 analysiert.

Bei dem Analyseverfahren werden Qualitätsmängelursachen vorzugsweise mittels einer oder mehrerer Analyseregeln bestimmt.

Zur Bestimmung der Qualitätsmängelursachen werden vorzugsweise durch einen Experten definierte Analyseregeln und/oder erlernte Analyseregeln verwendet.

Erlernte Analyseregeln werden vorzugsweise mittels eines maschinellen Lernverfahrens erlernt. Beispielsweise ist es dabei denkbar, dass Analyseregeln mittels eines überwachten und/oder unüberwachten maschinellen Lernverfahrens erlernt werden.

Anomalien und/oder Abweichungen in einem Prozessschritt des Produktionsprozesses sind vorzugsweise mittels der Prozessfehlerdaten 148 als Qualitätsmängelursache identifizierbar.

Anomalien und/oder Abweichungen in einem Prozessschritt des Produktionsprozesses sind einem mittels des Clusterverfahrens klassifizierten systematischen Qualitätsmangel vorzugsweise mittels der Prozessfehlerdaten 148 automatisiert zuordenbar, insbesondere mittels des Analyseverfahrens.

Vorzugsweise werden mittels des Analyseverfahrens Zusammenhänge zwischen den festgestellten Qualitätsmängelursachen und den in verschiedene Qualitätsmängelcluster 150 klassifizierten systematischen Qualitätsmängeln bestimmt.

Beispielsweise ist es denkbar, dass eine durch einen Experten definierte Analyseregel verwendet wird, welche einen Zusammenhang zwischen den Anomalien im Trockner 116 nach der Station zur kathodischen Tauchlackierung 114 und den Qualitätsmängeln F1 des Qualitätsmängelclusters 150 herstellt.

Vorzugsweise sind in der Visualisierung 152 des Qualitätsanalysesystem 130 Qualitätsmängelursachen für das in Fig. 8 dargestellte Qualitätsmängelcluster 150 in einem Fenster 154 der Visualisierung 152 darstellbar.

Die festgestellten Qualitätsmängelursachen umfassen vorzugsweise Anomalien und/oder Abweichungen im Produktionsprozess, insbesondere im Lackierprozess.

Mittels der bestimmten Zusammenhänge werden vorzugsweise automatisch bevorstehende systematische Qualitätsmängel ermittelt, vorzugsweise indem aus einer oder mehreren im laufenden Produktionsprozess festgestellten Anomalien und/oder Abweichungen durch die mittels des Analyseverfahrens bestimmten Zusammenhänge automatisch auf zukünftige Qualitätsmängel eines Werkstücks 106 rückgeschlossen wird, während ein Werkstück 106 den Produktionsprozess durchläuft.

Vorzugsweise wird das Werkstück 106 dabei mittels des Analyseverfahrens bereits beim Durchlaufen des Produktionsprozesses einem Qualitätsmängelcluster 150 zugeordnet.

Vorzugsweise sind somit auch im Rahmen der Qualitätskontrolle in der Kontrollstation 126 nicht erkennbare systematische Qualitätsmängel durch Rückschlüsse aus dem Produktionsprozess erkennbar.

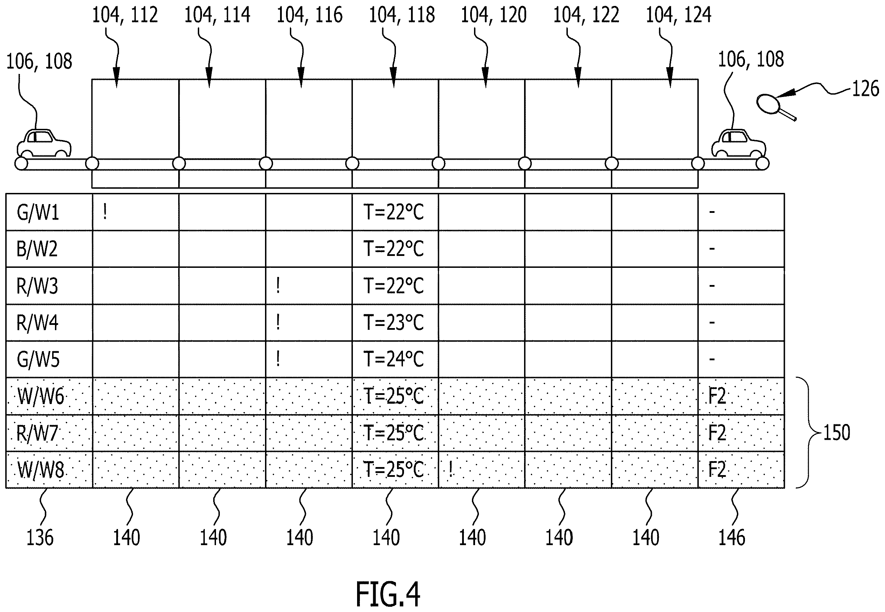

Eine in Fig. 4 dargestellte Ausführungsform von werkstückspezifischen Datensätzen 134 verschiedener Werkstücke 106 unterscheidet sich von der in Fig. 2 dargestellten Ausführungsform von werkstückspezifischen Datensätzen 134 verschiedener Werkstücke 106 im Wesentlichen dadurch, dass die Qualitätsdaten 146 der werkstückspezifischen Datensätze 134 der Werkstücke W6 bis W8 jeweils Informationen über den Qualitätsmangel F2 enthalten.

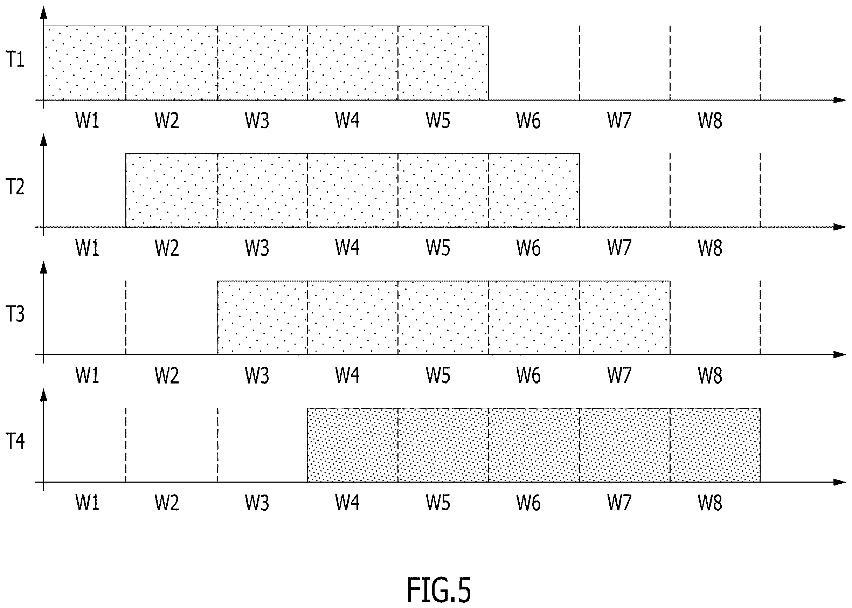

Zu dem Zeitpunkt T4 wird mittels des Clusterverfahrens unter Anwendung einer Klassifizierungsregel ein Qualitätsmängelcluster 150 erkannt, da die Qualitätsdaten 146 der werkstückspezifischen Datensätze 134 der Werkstücke W6 bis W8 jeweils den identischen Qualitätsmangel F2 enthalten (vergl. Fig. 5).

Die Prozessdaten 140 der werkstückspezifischen Datensätze 134 enthalten in der fünften Spalte Informationen zu einer Kabinentemperatur in der Base-Coat-Kabine 118.

Die Kabinentemperatur ist bereits bei den Werkstücken W4 und W5 angestiegen. Dabei ist es denkbar, dass die Kabinentemperatur in der Base-Coat-Kabine 118 bei den Werkstücken W6 bis W8 jeweils außerhalb eines für die Kabinentemperatur in der Base-Coat-Kabine 118 definierten Soll-Prozessfensters liegt.

Mittels des Analyseverfahrens wird die Kabinentemperatur in der Base-Coat-Kabine 118 vorzugsweise als Qualitätsmängelursache identifiziert.

Beispielsweise wird bei der Durchführung des Analyseverfahrens eine durch einen Experten definierte Analyseregel verwendet, welche einen Zusammenhang zwischen der Kabinentemperatur in der Base-Coat-Kabine 118 und den Qualitätsmängeln F2 des Qualitätsmängelclusters 150 herstellt.

Die Durchführung des Clusterverfahrens und des Analyseverfahrens stimmt bei der in den Fig. 4 und 5 dargestellten Ausführungsform der werkstückspezifischen Datensätze 134 mit der Durchführung des Clusterverfahrens und des Analyseverfahrens bei der in den Fig. 2 und 3 dargestellten Ausführungsform der werkstückspezifischen Datensätze 134 im Wesentlichen überein, so dass auf deren bevorstehende Beschreibung insoweit Bezug genommen wird.

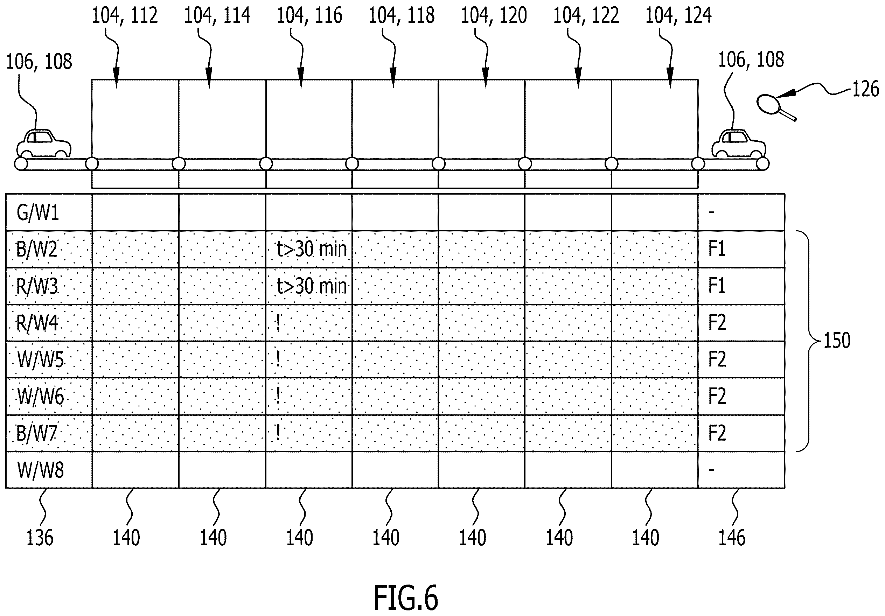

Eine in Fig. 6 dargestellte Ausführungsform von werkstückspezifischen Datensätzen 134 verschiedener Werkstücke 106 unterscheidet sich von der in Fig. 2 dargestellten Ausführungsform von werkstückspezifischen Datensätzen 134 verschiedener Werkstücke 106 im Wesentlichen dadurch, dass die Qualitätsdaten 146 der Werkstücke W2 und W3 jeweils Informationen über den Qualitätsmangel F1 enthalten und dass die Qualitätsdaten 146 der Werkstücke W4 bis W7 jeweils Informationen über den Qualitätsmangel F2 enthalten.

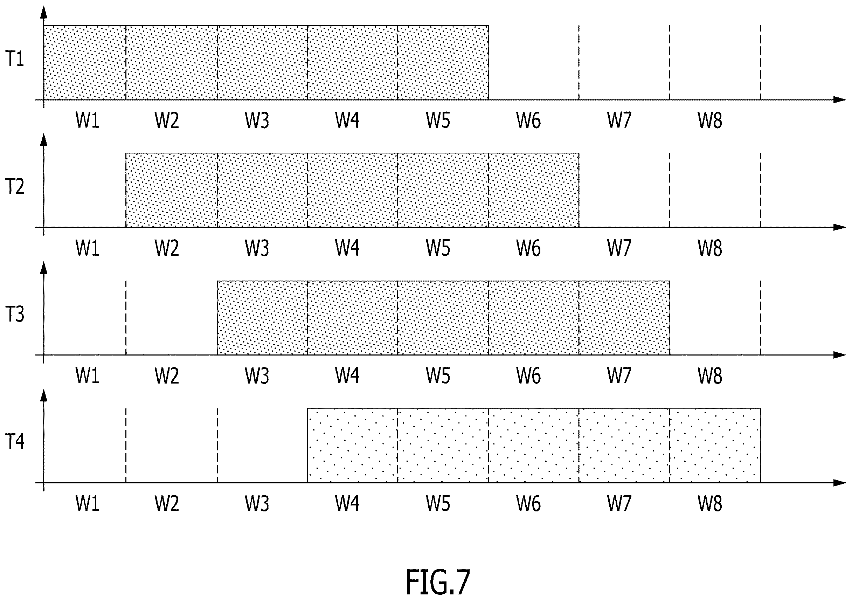

Die Qualitätsmängel F1 und F2 sind beispielsweise identisch und/oder ähnlich und werden mittels des Clusterverfahrens unter Anwendung einer Klassifizierungsregel als Qualitätsmängelcluster 150 bereits zu dem Zeitpunkt T1 erkannt (vergl. Fig. 7).

Die Prozessdaten 140 der werkstückspezifischen Datensätze 134 enthalten in der vierten Spalte Informationen über eine Sollzeitüberschreitung in dem Trockner 116 nach der Station zur kathodischen Tauchlackierung 114.

Insbesondere die Werkstücke W2 und W3, welche den Qualitätsmangel F1 aufweisen, sind hiervon betroffen.

Allerdings sind auch die auf die Werkstücke W2 und W3 folgenden Werkstücke W4 bis W7 von einer Sollzeitüberschreitung in dem Trockner 116 nach der Station zur kathodischen Tauchlackierung 114 betroffen.

Mittels des Analyseverfahrens wird die Sollzeitüberschreitung in dem Trockner 116 nach der Station zur kathodischen Tauchlackierung 114 vorzugsweise als Qualitätsmängelursache für die Qualitätsmängel F1 und F2, insbesondere für das Qualitätsmängelcluster 150, identifiziert.

Die Durchführung des Clusterverfahrens und des Analyseverfahrens stimmt bei der in den Fig. 6 und 7 dargestellten Ausführungsform der werkstückspezifischen Datensätze 134 mit der Durchführung des Clusterverfahrens und des Analyseverfahrens bei der in den Fig. 2 und 3 dargestellten Ausführungsform der werkstückspezifischen Datensätze 134 im Wesentlichen überein, so dass auf deren bevorstehende Beschreibung insoweit Bezug genommen wird.

Die unter Bezugnahme auf die Fig. 1 bis 8 beschriebenen Verfahrensschritte sind mittels des Qualitätsanalysesystems 130 nicht nur für einzelne Werkstücke 106 durchführbar.

Es ist insbesondere denkbar, dass die Verfahrensschritte mittels des Qualitätsanalysesystems 130 auch für mehrere Werkstücke 106, beispielsweise für mehrere zeichnerisch nicht dargestellte Fahrzeuganbauteile, durchgeführt werden, welche jeweils gemeinsam auf einem Werkstückträger angeordnet sind, während der Werkstückträger mit den darauf angeordneten Werkstücken 106 die Behandlungsstationen 104 durchläuft.

Vorzugsweise wird dabei anstatt eines werkstückspezifischen Datensatzes 134 ein werkstückträgerspezifischer Datensatz verwendet.

Ein werkstückträgerspezifischer Datensatz ist insbesondere einem Werkstückträger und sämtlichen auf dem jeweiligen Werkstückträger angeordneten Werkstücken 106 eindeutig zugeordnet, beispielsweise einem Werkstückträger und sämtlichen darauf angeordneten Fahrzeuganbauteilen.

Im Übrigen stimmen die mittels des Qualitätsanalysesystems 130 durchführbaren Verfahrensschritte mit den oben beschriebenen Verfahrensschritten überein, so dass auf deren diesbezügliche Beschreibung verwiesen wird.

Insgesamt kann ein Verfahren zur Analyse von Qualitätsmängeln von Werkstücken 106, vorzugsweise von Fahrzeugkarosserien 108 und/oder von Fahrzeuganbauteilen, nach oder bei dem Durchlaufen eines Produktionsprozesses in verfahrenstechnischen Anlagen 100, vorzugsweise nach oder bei dem Durchlaufen eines Lackierprozesses in Lackieranlagen 102, bereitgestellt werden, mittels welchem Qualitätsmängel vermieden werden können und/oder mittels welchem Qualitätsmängelursachen im Produktionsprozess ermittelt, vermieden und/oder behoben werden können. Ferner kann ein Qualitätsanalysesystem 130 zur Durchführung des derartigen Verfahrens zur Analyse von Qualitätsmängeln von Werkstücken 106 bereitgestellt werden.

## Patentansprüche

1. Verfahren zur Analyse von Qualitätsmängeln von Werkstücken (106), welche Fahrzeugkarossieren (108) und/oder Fahrzeuganbauteile sind, insbesondere nach und/oder bei dem Durchlaufen eines Produktionsprozesses in verfahrenstechnischen Anlagen (100), vorzugsweise nach und/oder bei dem Durchlaufen eines Lackierprozesses in Lackieranlagen (102), wobei das Verfahren Folgendes umfasst:
- Erstellen eines einer Fahrzeugkarossiere (108) und/oder einem Fahrzeuganbauteil eindeutig zugeordneten werkstückspezifischen Datensatzes (134) zu Beginn eines Produktionsprozesses, insbesondere zu Beginn eines Lackierprozesses und/oder Erstellen eines einem Werkstückträger eindeutig zugeordneten werkstückspezifischen Datensatzes zu Beginn eines Produktionsprozesses, insbesondere zu Beginn eines Lackierprozesses;
- Ergänzen des werkstückspezifischen Datensatzes (134) während eine Fahrzeugkarossiere (108) und/oder ein Fahrzeuganbauteil den Produktionsprozess, insbesondere den Lackierprozess, durchläuft mit insbesondere qualitätsrelevanten Prozessdaten (140) und/oder Ergänzen des werkstückträgerspezifischen Datensatzes während ein Werkstückträger den Produktionsprozess, insbesondere den Lackierprozess, durchläuft mit insbesondere qualitätsrelevanten Prozessdaten;
- Speichern des werkstückspezifischen Datensatzes (134) in einer Datenbank (142) und/oder Speichern des werkstückträgerspezifischen Datensatzes in einer Datenbank (142),
wobei als insbesondere qualitätsrelevante Prozessdaten (140), mittels welchen ein werkstückspezifischer Datensatz (134) und/oder ein werkstückträgerspezifischer Datensatz ergänzt wird, einer oder mehrere der folgenden Prozessparameter verwendet werden:
- Sollzeitüberschreitungen in Prozessschritten des Produktionsprozesses;
- Während dem Durchlaufen eines Prozessschrittes des Produktionsprozesses auftretende Ereignisse;
- Rohbauqualitätsdaten einer jeweiligen Fahrzeugkarossiere (108) und/oder eines jeweiligen Fahrzeuganbauteils;
- Anomalien und/oder Abweichungen im Produktionsprozess;
- Wetterdaten;
- Personendaten über Personen, die beim Durchlaufen eines Prozessschrittes des Produktionsprozesses an dem Prozessschritt beteiligt waren und
wobei das Verfahren in einer verfahrenstechnischen Anlage (100), insbesondere in einer Lackieranlage (102), durchgeführt wird, welche mehrere voneinander verschiedene Behandlungsstationen (104) umfasst, in welchen jeweils einzelne oder mehrere Prozessschritte des Produktionsprozesses, insbesondere des Lackierprozesses, durchführbar sind,
**dadurch gekennzeichnet, dass**
der werkstückspezifische Datensatz (134) und/oder der werkstückträgerspezifische Datensatz mit Qualitätsdaten (146) ergänzt wird, welche Informationen über Qualitätsmängel, insbesondere über Lackmängel, der jeweiligen Fahrzeugkarossiere (108) und/oder des jeweiligen Fahrzeuganbauteils enthalten, vorzugsweise am Ende des Produktionsprozesses, insbesondere am Ende des Lackierprozesses.

2. Verfahren nach Anspruch 1, **dadurch gekennzeichnet, dass** Qualitätsdaten (146) von mehreren werkstückspezifischen Datensätzen (134) und/oder von mehreren werkstückträgerspezifischen Datensätzen mittels eines Clusterverfahrens zur Erkennung von systematischen Qualitätsmängeln automatisch in verschiedene Qualitätsmängelcluster (150) klassifiziert werden.

3. Verfahren nach Anspruch 2, **dadurch gekennzeichnet, dass** mittels eines Analyseverfahrens automatisch Qualitätsmängelursachen für die mittels des Clusterverfahrens erkannten und in verschiedene Qualitätsmängelcluster (150) klassifizierten systematischen Qualitätsmängel festgestellt werden, vorzugsweise durch Analyse der insbesondere qualitätsrelevanten Prozessdaten (140) der werkstückspezifischen Datensätze (134) der Fahrzeugkarossieren (108) und/oder Fahrzeuganbauteile mit systematischen Qualitätsmängeln eines jeweiligen Qualitätsmängelclusters (150) und/oder durch Analyse der insbesondere qualitätsrelevanten Prozessdaten (140) der werkstückträgerspezifischen Datensätze der Werkstückträger, deren Fahrzeugkarossieren (108) und/oder Fahrzeuganbauteile systematische Qualitätsmängel eines jeweiligen Qualitätsmängelclusters (150) aufweisen.

4. Verfahren nach Anspruch 3, **dadurch gekennzeichnet, dass** die festgestellten Qualitätsmängelursachen Anomalien und/oder Abweichungen im Produktionsprozess, insbesondere im Lackierprozess, umfassen.

5. Verfahren nach Anspruch 3 oder 4, **dadurch gekennzeichnet, dass** mittels des Analyseverfahrens Zusammenhänge zwischen den festgestellten Qualitätsmängelursachen und den in verschiedene Qualitätsmängelcluster (150) klassifizierten systematischen Qualitätsmängeln bestimmt werden.

6. Verfahren nach Anspruch 5, **dadurch gekennzeichnet, dass** mittels der bestimmten Zusammenhänge bevorstehende systematische Qualitätsmängel automatisch ermittelt werden, vorzugsweise indem aus einer oder mehreren im laufenden Produktionsprozess festgestellten Anomalien und/oder Abweichungen durch die mittels des Analyseverfahrens bestimmten Zusammenhänge automatisch auf zukünftige Qualitätsmängel einer Fahrzeugkarossiere (108) und/oder eines Fahrzeuganbauteils rückgeschlossen wird, während eine Fahrzeugkarossiere (108) und/oder ein Fahrzeuganbauteil den Produktionsprozess durchläuft.

7. Verfahren nach einem der Ansprüche 1 bis 6, **dadurch gekennzeichnet, dass** der werkstückspezifische Datensatz (134) und/oder der werkstückträgerspezifische Datensatz in jedem einzelnen Prozessschritt mit insbesondere qualitätsrelevanten Prozessdaten (140) ergänzt wird.

8. Verfahren nach einem der Ansprüche 1 bis 7, **dadurch gekennzeichnet, dass** der werkstückspezifische Datensatz (134) und/oder der werkstückspezifische Datensatz mit Prozessfehlerdaten (148), welche Informationen über eine Anomalie und/oder Abweichung in einem Prozessschritt des Produktionsprozesses enthalten, ergänzt wird, während eine Fahrzeugkarossiere (108) und/oder ein Fahrzeuganbauteil und/oder ein Werkstückträger den Prozessschritt des Produktionsprozesses durchläuft.

9. Verfahren nach einem der Ansprüche 1 bis 8, **dadurch gekennzeichnet, dass** der werkstückspezifische Datensatz (134) und/oder der werkstückträgerspezifische Datensatz kontinuierlich oder diskontinuierlich mit den insbesondere qualitätsrelevanten Prozessdaten (140) ergänzt wird.

10. Verfahren nach einem der Ansprüche 1 bis 9, **dadurch gekennzeichnet, dass** der werkstückspezifische Datensatz (134) und/oder der werkstückträgerspezifische Datensatz jeweils mit insbesondere qualitätsrelevanten Prozessdaten (140) ergänzt wird, welche jeweils einen Zeitstempel umfassen, mittels welchem die jeweiligen Prozessdaten (140) einem Zeitpunkt und/oder einem Prozessschritt des Produktionsprozesses eindeutig zuordenbar sind.

11. Verfahren nach einem der Ansprüche 1 bis 10, **dadurch gekennzeichnet, dass** der ergänzte werkstückspezifische Datensatz (134) einer Fahrzeugkarossiere (108) und/oder eines Fahrzeuganbauteils und/oder der ergänzte werkstückträgerspezifische Datensatz eines Werkstückträgers in einer Datenbank (142) gespeichert wird während und/oder nachdem eine Fahrzeugkarossiere (108) und/oder ein Fahrzeuganbauteil und/oder ein Werkstückträger den Produktionsprozess durchlaufen hat.

12. Qualitätsanalysesystem (130) zur Analyse von Qualitätsmängeln von Werkstücken (106), welche Fahrzeugkarossieren (108) und/oder Fahrzeuganbauteile sind, insbesondere nach und/oder bei dem Durchlaufen eines Produktionsprozesses in verfahrenstechnischen Anlagen (100), vorzugsweise nach und/oder bei dem Durchlaufen eines Lackierprozesses in Lackieranlagen (102), umfassend
- eine Schnittstelle (132) zur Kommunikation mit einem Steuerungssystem (128) einer verfahrenstechnischen Anlage (100), insbesondere einer Lackieranlage (102);
- eine Steuereinrichtung, welche derart eingerichtet und ausgebildet ist, dass das Verfahren gemäß einem der Ansprüche 1 bis 11 mittels der Steuereinrichtung ausführbar ist.

13. Verfahrenstechnische Anlage (100), insbesondere Lackieranlage (102), umfassend:
- eine oder mehrere Behandlungsstationen (104);
- ein Steuerungssystem (128), mittels welchem ein Produktionsprozess, insbesondere ein Lackierprozess, in der einen oder in den mehreren Behandlungsstationen (104) steuerbar ist;
- ein Qualitätsanalysesystem (130) nach Anspruch 12.

## Claims

1. Method for analysing quality deficiencies of workpieces (106), namely vehicle bodies (108) and/or vehicle add-on parts, in particular after having undergone and/or while undergoing a production process in process engineering installations (100), preferably after having undergone and/or while undergoing a painting process in painting installations (102), wherein the method comprises the following:
- creating a workpiece-specific dataset (134) assigned unambiguously to a vehicle body (108) and/or to a vehicle add-on part at the start of a production process, in particular at the start of a painting process, and/or creating a workpiece holder-specific dataset assigned unambiguously to a workpiece holder at the start of a production process, in particular at the start of a painting process;
- supplementing the workpiece-specific dataset (134) while a vehicle body (108) and/or a vehicle add-on part is undergoing the production process, in particular the painting process, with in particular quality-relevant process data (140) and/or supplementing the workpiece holder-specific dataset while a workpiece holder is undergoing the production process, in particular the painting process, with in particular quality-relevant process data;
- storing the workpiece-specific dataset (134) in a database (142) and/or storing the workpiece holder-specific dataset in a database (142),
wherein one or more of the following process parameters are used as in particular quality-relevant process data (140) with which a workpiece-specific dataset (134) and/or a workpiece holder-specific dataset is supplemented:
- exceedances of target times in process steps of the production process;
- events occurring while a process step of the production process is being carried out;
- shell quality data concerning a respective vehicle body (108) and/or a respective vehicle add-on part;
- anomalies and/or deviations in the production process;
- weather data;
- personal data concerning people who were involved in a process step when the process step of the production process was carried out, and
wherein the method is performed in a process engineering installation (100), in particular in a painting installation (102), which comprises multiple mutually different treatment stations (104) in which individual or multiple process steps of the production process, in particular of the painting process, are each able to be performed,
**characterized in that**
the workpiece-specific dataset (134) and/or the workpiece holder-specific dataset is supplemented with quality data (146) containing information about quality deficiencies, in particular about paint deficiencies, of the respective vehicle body (108) and/or of the respective vehicle add-on part, preferably at the end of the production process, in particular at the end of the painting process.

2. Method according to Claim 1, **characterized in that** quality data (146) from multiple workpiece-specific datasets (134) and/or from multiple workpiece holder-specific datasets are classified automatically into different quality deficiency clusters (150) using a clustering method for detecting systematic quality deficiencies.

3. Method according to Claim 2, **characterized in that** an analysis method is used to automatically identify causes of quality deficiencies for the systematic quality deficiencies detected using the clustering method and classified into different quality deficiency clusters (150), preferably by analysing the in particular quality-relevant process data (140) in the workpiece-specific datasets (134) of the vehicle bodies (108) and/or vehicle add-on parts with systematic quality deficiencies of a respective quality deficiency cluster (150) and/or by analysing the in particular quality-relevant process data (140) in the workpiece holder-specific datasets of the workpiece holders whose vehicle bodies (108) and/or vehicle add-on parts exhibit systematic quality deficiencies of a respective quality deficiency cluster (150).

4. Method according to Claim 3, **characterized in that** the identified causes of quality deficiencies comprise anomalies and/or deviations in the production process, in particular in the painting process.

5. Method according to Claim 3 or 4, **characterized in that** the analysis method is used to determine relationships between the identified causes of quality deficiencies and the systematic quality deficiencies classified into different quality deficiency clusters (150).

6. Method according to Claim 5, **characterized in that** the determined relationships are used to automatically ascertain impending systematic quality deficiencies, preferably by automatically inferring future quality deficiencies of a vehicle body (108) and/or vehicle add-on part from one or more anomalies and/or deviations identified in the current production process using the relationships determined by way of the analysis method while a vehicle body (108) and/or a vehicle add-on part is undergoing the production process.

7. Method according to one of Claims 1 to 6, **characterized in that** the workpiece-specific dataset (134) and/or the workpiece holder-specific dataset is supplemented with in particular quality-relevant process data (140) in each individual process step.

8. Method according to one of Claims 1 to 7, **characterized in that** the workpiece-specific dataset (134) and/or the workpiece holder-specific dataset is supplemented with process error data (148) containing information about an anomaly and/or deviation in a process step of the production process while a vehicle body (108) and/or a vehicle add-on part and/or a workpiece holder is undergoing the process step of the production process.

9. Method according to one of Claims 1 to 8, **characterized in that** the workpiece-specific dataset (134) and/or the workpiece holder-specific dataset is supplemented continuously or discontinuously with the in particular quality-relevant process data (140).

10. Method according to one of Claims 1 to 9, **characterized in that** the workpiece-specific dataset (134) and/or the workpiece holder-specific dataset is supplemented in each case with in particular quality-relevant process data (140) each comprising a timestamp using which the respective process data (140) are able to be assigned unambiguously to a time and/or to a process step of the production process.

11. Method according to one of Claims 1 to 10, **characterized in that** the supplemented workpiece-specific dataset (134) of a vehicle body (108) and/or of a vehicle add-on part and/or the supplemented workpiece holder-specific dataset of a workpiece holder is stored in a database (142) while a vehicle body (108) and/or a vehicle add-on part and/or a workpiece holder are/is undergoing the production process and/or after a vehicle body (108) and/or a vehicle add-on part and/or a workpiece holder have/has undergone the production process.

12. Quality analysis system (130) for analysing quality deficiencies of workpieces (106), namely vehicle bodies (108) and/or vehicle add-on parts, in particular after having undergone and/or while undergoing a production process in process engineering installations (100), preferably after having undergone and/or while undergoing a painting process in painting installations (102), comprising
- an interface (132) for communication with a control system (128) of a process engineering installation (100), in particular a painting installation (102);
- a control device configured and designed in such a way that the method according to one of Claims 1 to 11 is able to be carried out by the control device.

13. Process engineering installation (100), in particular painting installation (102), comprising:
- one or more treatment stations (104);
- a control system (128) able to be used to control a production process, in particular a painting process, in the one or more treatment stations (104);
- a quality analysis system (130) according to Claim 12.

## Revendications

1. Procédé d'analyse de défauts de qualité de pièces (106), lesquelles sont des carrosseries de véhicules (108) et/ou des pièces rapportées de véhicules, en particulier après et/ou pendant le passage par un processus de production dans des installations industrielles (100), de préférence après et/ou pendant le passage par un processus de peinture dans des installations de peinture (102), le procédé comprenant les étapes suivantes:
- créer un jeu de données (134) spécifique à la pièce, associé de manière univoque à une carrosserie (108) et/ou à une pièce rapportée de véhicule au début d'un processus de production, en particulier au début d'un processus de peinture, et/ou créer un jeu de données spécifique au porte-pièce, associé de manière univoque à un porte-pièce au début d'un processus de production, en particulier au début d'un processus de peinture;
- compléter le jeu de données spécifique à la pièce (134) pendant qu'une carrosserie de véhicule (108) et/ou une pièce rapportée de véhicule passe par le processus de production, en particulier le processus de peinture, par des données de processus (140) en particulier relatives à la qualité, et/ou compléter le jeu de données spécifique au porte-pièce pendant qu'un porte-pièce passe par le processus de production, en particulier le processus de peinture, par des données de processus en particulier relatives à la qualité;
- mémoriser le jeu de données spécifique à la pièce (134) dans une base de données (142) et/ou mémoriser le jeu de données spécifique au porte-pièce dans une base de données (142),
dans lequel, en tant que données de processus (140), en particulier relatives à la qualité, au moyen desquelles un jeu de données spécifique à la pièce (134) et/ou un jeu de données spécifique au porte-pièce est complété, un ou plusieurs des paramètres de processus suivants sont utilisés:
- dépassement de temps cible dans des étapes de processus du processus de production;
- événements survenant pendant le passage par une étape de processus du processus de production;
- données de qualité de carrosserie d'une carrosserie de véhicule (108) respective et/ou d'une pièce rapportée de véhicule respective;
- anomalies et/ou écarts dans le processus de production;
- données météorologiques;
- données de personnes concernant des personnes qui ont participé à une étape de processus lors du passage par une étape de processus du processus de production, et
dans lequel le procédé est mis en œuvre dans une installation industrielle (100), en particulier dans une installation de peinture (102), laquelle comprend plusieurs stations de traitement (104) différentes les unes des autres, dans lesquelles une ou plusieurs étapes de processus du processus de production, en particulier du processus de peinture, peuvent être respectivement réalisées,
**caractérisé en ce que**
le jeu de données spécifique à la pièce (134) et/ou le jeu de données spécifique au porte-pièce sont complétés par des données de qualité (146) qui contiennent des informations concernant des défauts de qualité, en particulier des défauts de peinture, de la carrosserie de véhicule (108) respective et/ou de la pièce rapportée de véhicule respective, de préférence à la fin du processus de production, en particulier à la fin du processus de peinture.

2. Procédé selon la revendication 1, **caractérisé en ce que** des données de qualité (146) provenant de plusieurs jeux de données spécifiques à la pièce (134) et/ou de plusieurs jeux de données spécifiques au porte-pièce sont classées automatiquement en différents groupements de défauts de qualité (150) au moyen d'un procédé de regroupement pour l'identification de défauts de qualité systématiques.

3. Procédé selon la revendication 2, **caractérisé en ce que**, au moyen d'un procédé d'analyse, des causes de défauts de qualité pour les défauts de qualité systématiques identifiés au moyen du procédé de regroupement et classés en différents groupements de défauts de qualité (150) sont déterminées automatiquement, de préférence par analyse des données de processus (140), en particulier relatives à la qualité, des jeux de données spécifiques à la pièce (134) des carrosseries de véhicules (108) et/ou des pièces rapportées de véhicules présentant des défauts de qualité systématiques d'un groupement de défauts de qualité respectif (150), et/ou par analyse des données de processus (140), en particulier relatives à la qualité, des jeux de données spécifiques au porte-pièce des porte-pièces, dont les carrosseries de véhicules (108) et/ou les pièces rapportées de véhicules présentent des défauts de qualité systématiques d'un groupement de défauts de qualité (150) respectif.

4. Procédé selon la revendication 3, **caractérisé en ce que** les causes de défauts de qualité déterminées comprennent des anomalies et/ou des écarts dans le processus de production, en particulier dans le processus de peinture.

5. Procédé selon la revendication 3 ou 4, **caractérisé en ce que**, au moyen du procédé d'analyse, des corrélations entre les causes de défauts de qualité déterminées et les défauts de qualité systématiques classés en différents groupements de défauts de qualité (150) sont déterminées.

6. Procédé selon la revendication 5, **caractérisé en ce que**, au moyen des corrélations déterminées, des défauts de qualité systématiques imminents sont déterminés automatiquement, de préférence en déduisant automatiquement des défauts de qualité futurs d'une carrosserie de véhicule (108) et/ou d'une pièce rapportée de véhicule à partir d'une ou plusieurs anomalies et/ou d'un ou plusieurs écarts constatés dans le processus de production en cours, grâce aux corrélations déterminées au moyen du procédé d'analyse, pendant qu'une carrosserie de véhicule (108) et/ou une pièce rapportée de véhicule passe par le processus de production.

7. Procédé selon l'une quelconque des revendications 1 à 6, **caractérisé en ce que** le jeu de données spécifique à la pièce (134) et/ou le jeu de données spécifique au porte-pièce sont complétés, dans chaque étape de processus individuelle, par des données de processus (140) en particulier relatives à la qualité.

8. Procédé selon l'une des revendications 1 à 7, **caractérisé en ce que** le jeu de données spécifique à la pièce (134) et/ou le jeu de données spécifique au porte-pièce sont complétés par des données d'erreur de processus (148) qui contiennent des informations concernant une anomalie et/ou un écart dans une étape du processus de production, pendant qu'une carrosserie de véhicule (108) et/ou une pièce rapportée de véhicule et/ou un porte-pièce passe par l'étape de processus du processus de production.

9. Procédé selon l'une quelconque des revendications 1 à 8, **caractérisé en ce que** le jeu de données spécifique à la pièce (134) et/ou le jeu de données spécifique au porte-pièce est complété de manière continue ou discontinue par les données de processus (140), en particulier relatives à la qualité.

10. Procédé selon l'une quelconque des revendications 1 à 9, **caractérisé en ce que** le jeu de données spécifique à la pièce (134) et/ou le jeu de données spécifique au porte-pièce sont respectivement complétés par des données de processus (140),
en particulier relatives à la qualité, lesquelles comportent respectivement un horodatage au moyen duquel
les données de processus (140) respectives peuvent être associées de manière univoque à un instant et/ou à une étape du processus de production.

11. Procédé selon l'une quelconque des revendications 1 à 10, **caractérisé en ce que** le jeu de données spécifique à la pièce (134) complété d'une carrosserie de véhicule (108) et/ou d'une pièce rapportée de véhicule et/ou le jeu de données spécifique au porte-pièce complété d'un porte-pièce est mémorisé dans une base de données (142) pendant et/ou après qu'une carrosserie de véhicule (108) et/ou une pièce rapportée de véhicule et/ou un porte-pièce est passé par le processus de production.

12. Système d'analyse de qualité (130) pour l'analyse de défauts de qualité de pièces (106), lesquelles sont des carrosseries de véhicules (108) et/ou des pièces rapportées de véhicules, en particulier après et/ou pendant le passage par un processus de production dans des installations industrielles (100), de préférence après et/ou pendant le passage par un processus de peinture dans des installations de peinture (102), comprenant
- une interface (132) pour la communication avec un système de commande (128) d'une installation industrielle (100), en particulier d'une installation de peinture (102);
- un dispositif de commande, lequel est configuré et conçu de telle sorte que le procédé selon l'une quelconque des revendications 1 à 11 peut être mis en œuvre au moyen du dispositif de commande.

13. Installation industrielle (100), en particulier installation de peinture (102), comprenant:
- une ou plusieurs stations de traitement (104);
- un système de commande (128) au moyen duquel un processus de production, en particulier un processus de peinture, peut être commandé dans la ou les plusieurs stations de traitement (104);
- un système d'analyse de qualité (130) selon la revendication 12.
